(19) Europäisches Patentamt
European Patent Office
Office européen des brevets

(11) **EP 4 357 692 A1**

(12) **EUROPEAN PATENT APPLICATION**
published in accordance with Art. 153(4) EPC

(43) Date of publication:
**24.04.2024 Bulletin 2024/17**

(21) Application number: **22914037.1**

(22) Date of filing: **02.12.2022**

(51) International Patent Classification (IPC):
**F24F 11/64** (2018.01)    **F24F 11/85** (2018.01)
**F24F 11/84** (2018.01)    **F24F 5/00** (2006.01)

(52) Cooperative Patent Classification (CPC):
**F24F 5/00; F24F 11/64; F24F 11/84; F24F 11/85;**
Y02E 60/14

(86) International application number:
**PCT/CN2022/136337**

(87) International publication number:
**WO 2023/124782 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  27.12.2021  CN 202111619177
         27.12.2021  CN 202111616407

(72) Inventors:
• **FANG, Xing**
  **Shanghai 200080 (CN)**
• **LI, Yuanyang**
  **Shanghai 200080 (CN)**
• **QIU, Yide**
  **Shanghai 200080 (CN)**
• **FEI, Jie**
  **Shanghai 200080 (CN)**
• **WANG, Cong**
  **Shanghai 200080 (CN)**

(74) Representative: **Whitlock, Holly Elizabeth Ann et al**
  **Maucher Jenkins**
  **Seventh Floor Offices**
  **Artillery House**
  **11-19 Artillery Row**
  **London SW1P 1RT (GB)**

(71) Applicants:
• **Shanghai Kong Intelligent Building Co., Ltd**
  **Shanghai 200080 (CN)**
• **GD Midea Heating & Ventilating Equipment Co., Ltd.**
  **Foshan, Guangdong 528311 (CN)**

(54) **CONTROL METHOD AND APPARATUS OF ICE STORAGE AIR CONDITIONING SYSTEM, AND ELECTRONIC DEVICE**

(57)    A control method and apparatus for an ice storage air conditioning system, and an electronic device. The method is applied to a controller of the ice storage air conditioning system. The method comprises: adjusting parameters of the ice storage air conditioning system in the current cooling mode on the basis of the outlet temperature of a plate heat exchanger of the ice storage air conditioning system; and controlling the ice storage air conditioning system to perform a cooling operation on the basis of the parameters of the ice storage air conditioning system. The present disclosure further provides a control method for an ice storage air conditioning system, applied to a controller of the ice storage air conditioning system. The method comprises: on the basis of the outlet temperature of a plate heat exchanger of the ice storage air conditioning system, adjusting parameters of the ice storage air conditioning system when a cooling mode is switched; and controlling the ice storage air conditioning system to perform a cooling operation on the basis of the parameters of the ice storage air conditioning system.

ditioning system to perform a cooling operation on the basis of the parameters of the ice storage air conditioning system.

Adjusting parameters of the ice storage air-conditioning system in a current cooling mode based on an outlet temperature of a plate heat exchanger of the ice storage air-conditioning system — S202

Controlling the ice storage air-conditioning system to perform a cooling operation based on the parameters of the ice storage air-conditioning system — S204

FIG. 2

**Description**

**CROSS-REFERENCE TO RELATED APPLICATIONS**

This application claims priority of the Chinese Patent Application No. 202111619177.6, entitled "Method and Device for Controlling Ice Storage Air-Conditioning System, and Electronic Equipment" filed in the China National Intellectual Property Administration on Dec. 27, 2021, and claims the priority of the Chinese Patent Application No. 202111616407.3, entitled "Method and Device for Controlling Ice Storage Air-Conditioning System, and Electronic Equipment" filed in the China National Intellectual Property Administration on Dec. 27, 2021, the entire contents of the above applications are incorporated herein by reference.

**TECHNICAL FIELD**

The present disclosure relates to the field of air conditioning systems, and in particular, to a method and a device for controlling an ice storage air-conditioning system, and an electronic device.

**BACKGROUND**

Ice storage air-conditioning system uses refrigeration equipment to remove heat from a cold storage medium during times when no or little cooling capacity is needed (such as at night), and then the stored cooling capacity is utilized during peak periods of air conditioning or industrial cooling. Through the application of ice storage technology, the operation period of refrigeration equipment can be shifted. On the one hand, cheap electricity at night can be used, and on the other hand, the peak electricity load during the day can be reduced, so as to achieve the purpose of shifting power peaks and troughs and reducing electricity bills. The difficulty of the ice storage air-conditioning system is to ensure the stability of supply water temperature in a switching process of the dual duty chiller and the ice tank.

In related arts, the ice storage air-conditioning system will determine an operation mode of cold source equipment according to an electricity price in the current period, such as an ice tank cooling mode, a dual-condition chiller cooling mode and a combined cooling mode. During a mode switch process, due to a delay in switching on and switching off a water chilling unit, the traditional control strategy cannot ensure a stable control for water temperature. Especially for places such as factories and laboratories that have strict requirements on temperature and humidity, a fluctuation range of the supply water temperature is usually required to not exceed ±0.5 °C. A switch control logic of the ice storage air-conditioning system will lead to a large fluctuation range of an outlet water temperature, which affects users' experience.

**SUMMARY**

In view of this, some embodiments of the present disclosure provide a method and a device for controlling an ice storage air-conditioning system, and an electronic device, to ensure a stable outlet water temperature in the ice storage air-conditioning system and improve the user's experience.

In accordance with some embodiments of the present disclosure, a method for controlling an ice storage air-conditioning system is provided, which is applied to a controller of the ice storage air-conditioning system. The method includes steps of: adjusting parameters of the ice storage air-conditioning system in a current cooling mode based on an outlet temperature of a plate heat exchanger of the ice storage air-conditioning system; and controlling the ice storage air-conditioning system to perform a cooling operation based on the parameters of the ice storage air-conditioning system.

In some embodiments, the current cooling mode of the above ice storage air-conditioning system may be a dual-condition chiller cooling mode; and the step of adjusting the parameters of the ice storage air-conditioning system in the current cooling mode based on the outlet temperature of the plate heat exchanger of the ice storage air-conditioning system includes steps of: determining a number of operating water chilling units of the ice storage air-conditioning system based on an outlet water temperature and a current load rate of the ice storage air-conditioning system; determining a number of operating chilled water pumps of the ice storage air-conditioning system to be the same as the number of operating water chilling units; and adjusting an operation frequency of the chilled water pump based on the outlet temperature of the plate heat exchanger of the ice storage air-conditioning system.

In some embodiments, the step of adjusting the parameters of the ice storage air-conditioning system in the current cooling mode based on the outlet temperature of the plate heat exchanger of the ice storage air-conditioning system may include steps of: obtaining a target temperature of the ice storage air-conditioning system; increasing the operation frequency of the chilled water pump in response to a determination that the outlet temperature of the plate heat exchanger is greater than a sum of the target temperature and a preset first deviation value; and reducing the operation frequency of the chilled water pump in response to a determination that the outlet temperature of the plate heat exchanger is smaller than a difference value between the target temperature and the first deviation value.

In some embodiments, the current cooling mode of the above ice storage air-conditioning system is an ice-storage tank cooling mode; and the step of adjusting the parameters of the ice storage air-conditioning system in the current cooling mode based on the outlet temperature of the plate heat exchanger of the ice storage air-conditioning system may include at least one of the following: adjusting an opening degree of a valve of an ice storage tank in the ice storage air-conditioning system based on the outlet temperature of the plate heat exchanger of the ice storage air-conditioning system; adjusting an operation frequency of a chilled water pump based on the outlet temperature of the plate heat exchanger of the ice storage air-conditioning system; and adjusting a number of operating chilled water pumps based on the outlet temperature of the plate heat exchanger of the ice storage air-conditioning system.

In some embodiments, the step of adjusting the opening degree of the valve of the ice storage tank in the ice storage air-conditioning system based on the outlet temperature of the plate heat exchanger of the ice storage air-conditioning system may include steps of: increasing the opening degree of the valve of the ice storage tank in response to a determination that the outlet temperature of the plate heat exchanger is greater than a sum of a target temperature and a preset second deviation value; and reducing the opening degree of the valve of the ice storage tank in response to a determination that the outlet temperature of the plate heat exchanger is smaller than a difference value between the target temperature and the second deviation value. The step of adjusting the number of operating chilled water pumps based on the outlet temperature of the plate heat exchanger of the ice storage air-conditioning system includes steps of: increasing the number of operating chilled water pumps in response to a determination that the outlet temperature of the plate heat exchanger is greater than a sum of the target temperature and a preset third deviation value; and reducing the number of operating chilled water pumps in response to a determination that the outlet temperature of the plate heat exchanger is smaller than a difference value between the target temperature and the third deviation value.

In some embodiments, the current cooling mode of the above ice storage air-conditioning system is a combined cooling mode with a dual duty chiller and an ice storage tank; the step of adjusting the parameters of the ice storage air-conditioning system in the current cooling mode based on the outlet temperature of the plate heat exchanger of the ice storage air-conditioning system may include steps of: determining a number of operating water chilling units of the ice storage air-conditioning system based on an outlet water temperature and a current load rate of the ice storage air-conditioning system; determining a number of operating chilled water pumps of the ice storage air-conditioning system to be the same as the number of operating water chilling units; adjust an opening degree of a valve of an ice storage tank in the ice storage air-conditioning system based on the outlet temperature of the plate heat exchanger of the ice storage air-conditioning system; and adjusting, in response to a determination that the opening degree of the valve is adjusted to a preset limit of the opening degree, an operation frequency of the chilled water pump based on the outlet temperature of the plate heat exchanger of the ice storage air-conditioning system.

In some embodiments, the step of adjusting, in response to a determination that the opening degree of the valve is adjusted to a preset limit of the opening degree, an operation frequency of the chilled water pump based on the outlet temperature of the plate heat exchanger of the ice storage air-conditioning system may include steps of: increasing, in response to a determination that the opening degree of the valve is increased to a preset upper limit of the opening degree, the operation frequency of the chilled water pump based on the outlet temperature of the plate heat exchanger of the ice storage air-conditioning system; and reducing, in response to a determination that the opening degree of the valve is reduced to a preset lower limit of the opening degree, the operation frequency of the chilled water pump based on the outlet temperature of the plate heat exchanger of the ice storage air-conditioning system.

In some embodiments, the above method may also include a step of: determining the current cooling mode of the ice storage air-conditioning system based on a current power time period and/or an ice amount in an ice storage tank of the ice storage air-conditioning system.

In some embodiments, the step of determining the current cooling mode of the ice storage air-conditioning system based on the current power time period and/or the ice amount in the ice storage tank of the ice storage air-conditioning system may include steps of: determining that the current cooling mode of the ice storage air-conditioning system is a dual-condition chiller cooling mode in response to a determination that the current power time period is in a power wave flat period or the ice amount in the ice storage tank of the ice storage air-conditioning system is smaller than a preset first threshold; determining that the current cooling mode of the ice storage air-conditioning system is an ice-storage tank cooling mode in response to a determination that the current power time period is in a power wave peak period, and the ice amount in the ice storage tank of the ice storage air-conditioning system is greater than a preset second threshold; and determining that the current cooling mode of the ice storage air-conditioning system is a combined cooling mode with a dual duty chiller and the ice storage tank in response to a determination that the current power time period is in the power wave peak period and the ice amount in the ice storage tank of the ice storage air-conditioning system is smaller than a preset third threshold, or the current power time period is in the power wave flat period and the ice amount in the ice storage tank of the ice storage air-conditioning system is greater than a preset fourth threshold.

In accordance with some embodiments of the present disclosure, a device for controlling an ice storage air-conditioning system is also provided, which is applied to a controller of the ice storage air-conditioning system. The device includes: a cooling parameter determination module, which is configured to adjust parameters of the ice storage air-conditioning system in a current cooling mode based on an outlet temperature of a plate heat exchanger of the ice storage air-conditioning system; and a cooling operation execution module, which is configured to control the ice storage air-conditioning system to perform a cooling operation based on the parameters of the ice storage air-conditioning system.

In accordance with other embodiments of the present disclosure, a method for controlling an ice storage air-conditioning system is also provided, which is applied to a controller of an ice storage air-conditioning system. The method includes steps of: adjusting parameters of the ice storage air-conditioning system when switching a cooling mode based on an outlet temperature of a plate heat exchanger of the ice storage air-conditioning system; and controlling the ice storage air-conditioning system to perform a cooling operation based on the parameters of the ice storage air-conditioning system.

In some embodiments, the cooling mode of the ice storage air-conditioning system is switched from a dual-condition chiller cooling mode to an ice-storage tank cooling mode; the step of adjusting the parameters of the ice storage air-conditioning system when switching the cooling mode based on the outlet temperature of the plate heat exchanger of the ice storage air-conditioning system may include steps of: maintaining a working status of the chilled water pump of the ice storage air-conditioning system, and adjusting a valve of an ice storage tank in the ice storage air-conditioning system and a regulating valve of the plate heat exchanger; where an opening degree of the valve of the ice storage tank and an opening degree of the regulating valve of the plate heat exchanger are determined both based on the outlet temperature of the plate heat exchanger; and switching off a water chilling unit, a cooling water pump and a cooling water tower of the ice storage air-conditioning system.

In some embodiments, the cooling mode of the ice storage air-conditioning system is switched from the ice-storage tank cooling mode to the dual-condition chiller cooling mode; ; the step of adjusting the parameters of the ice storage air-conditioning system when switching the cooling mode based on the outlet temperature of the plate heat exchanger of the ice storage air-conditioning system may include steps of: determining a number of operating water chilling units of the ice storage air-conditioning system after a mode switching; switching on the number of operating water chilling units, cooling water pumps and cooling water towers; and adjusting an opening degree of a valve of an ice storage tank in the ice storage air-conditioning system based on an outlet water temperature of the water chilling unit and the outlet temperature of the plate heat exchanger

In some embodiments, the step of determining the number of operating water chilling units of the ice storage air-conditioning system after mode switching may include steps of: obtaining a load of the ice storage air-conditioning system before the mode switching; determining a predicted load of the ice storage air-conditioning system after the mode switching based on the load before switching and a pre-established load prediction model; and determining the number of operating water chilling units of the ice storage air-conditioning system after the mode switching based on the predicted load after the mode switching.

In some embodiments, the step of adjusting the opening degree of the valve of the ice storage tank in the ice storage air-conditioning system based on the outlet temperature of the chiller and the outlet temperature of the plate heat exchanger includes steps of: obtaining an actual load of the ice storage air-conditioning system after the mode switching; increasing the opening degree of the valve of the ice storage tank in the ice storage air-conditioning system in response to a determination that a value obtained by subtracting the outlet water temperature of the water chilling unit with the outlet temperature of the plate heat exchanger is greater than a preset first threshold, or a ratio of the predicted load to the actual load after the mode switching is smaller than a preset ratio threshold; reducing the opening degree of the valve of the ice storage tank in the ice storage air-conditioning system in response to a determination that the ratio of the predicted load to the actual load after mode switching is greater than the ratio threshold; and closing the valve of the ice storage tank in the ice storage air-conditioning system in response to a determination that an absolute value of a difference value between the outlet water temperature of the water chilling unit and the outlet temperature of the plate heat exchanger is smaller than a preset second threshold.

In some embodiments, the step of reducing the opening degree of the valve of the ice storage tank in the ice storage air-conditioning system includes a step of: determining the opening degree of the valve of the ice storage tank in the ice storage air-conditioning system through the following formula: $V_{1,ub}$ = ($T_{ch,out}$ - $T_{ice,out}$) / ($T_{ch,out}$ - $T_3$ + $T_{comp}$); where, $V_{1,ub}$ is an upper limit of the opening degree of the valve of the ice storage tank in the ice storage air-conditioning system, $T_{ch,out}$ is the outlet water temperature of the water chilling unit, and $T_{ice,out}$ is an outlet water temperature of the ice storage tank, $T_3$ is the outlet temperature of the plate heat exchanger, and $T_{comp}$ is a preset compensation temperature.

In some embodiments, the above method may further include a step of: switching a cooling mode of the ice storage air-conditioning system based on a current power time period and/or an ice amount in an ice storage tank of the ice storage air-conditioning system.

In some embodiments, the step of switching the cooling mode of the ice storage air-conditioning system may include a step of: switching the cooling mode of the ice storage air-conditioning system from a dual-condition chiller cooling mode to an ice-storage tank cooling mode; or alternatively, switching the cooling mode of the ice storage air-conditioning system from the ice-storage tank cooling mode to the dual-condition chiller cooling mode.

In accordance with some embodiments of the present disclosure, a control device for an ice storage air-conditioning system is also provided, which is applied to a controller of the ice storage air-conditioning system. The device includes: a cooling parameter determination module, which is configured to adjust parameters of the ice storage air-conditioning system when switching a cooling mode based on an outlet temperature of a plate heat exchanger of the ice storage air-conditioning system; and a cooling operation execution module, which is configured to control the ice storage air-conditioning system to perform a cooling operation based on the parameters of the ice storage air-conditioning system.

In accordance with some embodiments of the present disclosure an electronic device is also provided, which includes a processor and a memory. The memory stores computer-executable instructions that are executable by the processor, and the processor, when executing the computer-executable instructions is configured to implement the method for controlling the ice storage air-conditioning system of some embodiments and/or the method for controlling the ice storage air-conditioning system of other embodiments of the present disclosure as described above.

In accordance with some embodiments of the present disclosure, a computer-readable storage medium is also provided, which stores computer-executable instructions that, when invoked and executed by a processor, cause the processor to implement the method for controlling the ice storage air-conditioning system in some embodiments of the present disclosure and/or the method for controlling the ice storage air-conditioning system in other embodiments of the present disclosure. as described above.

Other features and advantages of the present disclosure will be set forth in the subsequent description, or some of the features and advantages may be inferred or unambiguously determined from the description, or may be learned by practicing the above techniques of the present disclosure.

In order to make the above objectives, features and advantages of the present disclosure more obvious and comprehensible, preferred embodiments are given below and described in detail with reference to the accompanying drawings.

## DESCRIPTION OF DRAWINGS

In order to explain the technical solutions in specific embodiments of the present disclosure or related technologies more clearly, the drawings that need to be used in the description of the specific embodiments or related technologies will be briefly introduced below. Obviously, the drawings in the following description are merely some embodiments of the present disclosure, and for persons of ordinary skill in the art, other drawings may also be obtained based on these drawings without exerting creative efforts.

FIG. 1 is a schematic diagram of an ice storage air-conditioning system according to an embodiment of the present disclosure;

FIG. 2 is a flowchart of a method for controlling an ice storage air-conditioning system according to some embodiments of the present disclosure;

FIG. 3 is a flowchart of another method for controlling the ice storage air-conditioning system according to some embodiments of the present disclosure;

FIG. 4 is a schematic diagram of determining a cooling mode of an ice storage system according to some embodiments of the present disclosure;

FIG. 5 is a schematic diagram of a control process for pumps and valves in a dual-condition chiller cooling mode according to some embodiments of the present disclosure;

FIG. 6 is a schematic diagram of a control process for pumps and valves in an ice-storage tank cooling mode according to some embodiments of the present disclosure;

FIG. 7 is a schematic diagram of a control process for pumps and valves in a combined cooling mode of the dual duty chiller and the ice storage tank according to some embodiments of the present disclosure;

FIG. 8 is a schematic structural diagram of a device for controlling an ice storage air-conditioning system according to some embodiments of the present disclosure;

FIG. 9 is a flowchart of a method for controlling an ice storage air-conditioning system according to other embodiments of the present disclosure;

FIG. 10 is a flowchart of another method for controlling the ice storage air-conditioning system according to other embodiments of the present disclosure;

FIG. 11 is a schematic diagram of a control process for switching the dual-condition cooling mode to the ice-storage tank cooling mode according to other embodiments of the present disclosure;

FIG. 12 is a schematic diagram of a control process for switching the ice-storage tank cooling mode to a dual-condition cooling mode according to other embodiments of the present disclosure;

FIG. 13 is a schematic structural diagram of a device for controlling an ice storage air-conditioning system according to other embodiments of the present disclosure; and

FIG. 14 is a schematic structural diagram of an electronic device according to some embodiments of the present disclosure.

## DETAILED DESCRIPTION OF EMBODIMENTS

To make the purpose, technical solutions and advantages of the embodiments of the present disclosure clearer, the technical solutions of the present disclosure will be clearly and comprehensively described below in conjunction with the accompanying drawings. Obviously, the embodiments described are part of the embodiments of the present disclosure not all embodiments. On basis of the embodiments in this disclosure, all other embodiments obtained by persons of ordinary skill in the art without exerting creative efforts fall within the protection scope of this disclosure.

At present, the ice storage air-conditioning system will determine an operation mode of cold source equipment according to an electricity price in the current period, such as an ice-storage tank cooling mode, a dual-condition chiller cooling mode and a combined cooling mode. During a mode switch process, due to a delay in switching on and switching off a water chilling unit, the traditional control strategy cannot ensure a stable control for water temperature. Especially for places such as factories and laboratories that have strict requirements on temperature and humidity, where a fluctuation range of the supply water temperature is usually required to not exceed ±0.5 °C. A switch control logic of the ice storage air-conditioning system will cause the outlet water temperature to fluctuate in a large range, affecting users' experience.

On the basis of this, some embodiments of the present disclosure provide a control method and a control device for an ice storage air-conditioning system, particularly, related to an intelligent and undisturbed method for controlling an ice storage air-conditioning system, which can ensure a stable control of an outlet temperature of chilled water for plate replacement while minimizing an energy consumption of the chilled water pump.

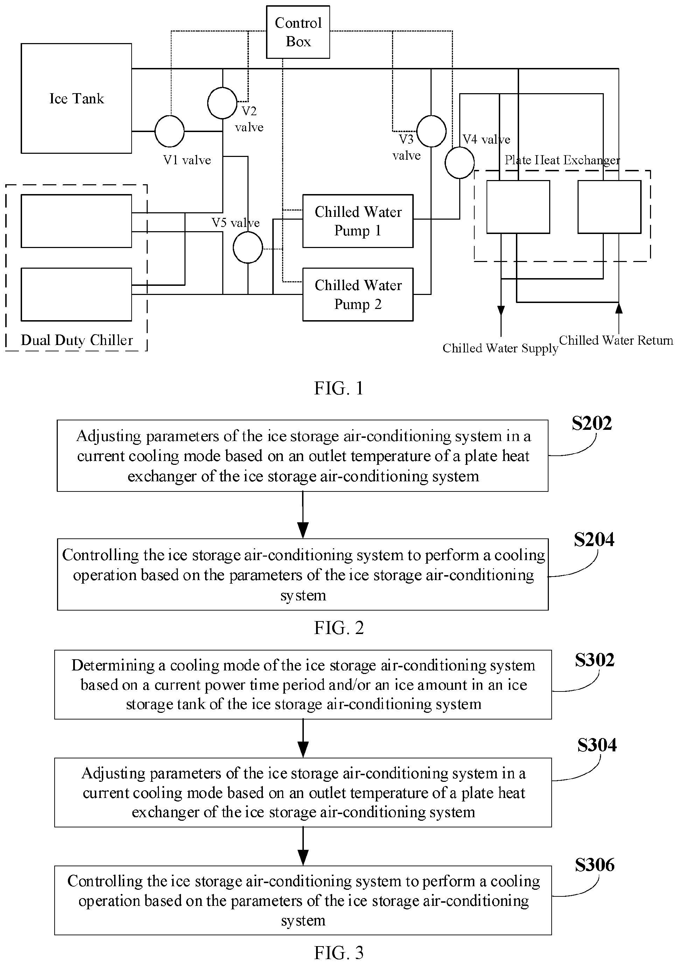

To facilitate understanding of this embodiment, a method for controlling an ice storage air-conditioning system according to some embodiments of the present disclosure is first introduced in detail with reference to FIGS. 1 to 7.

According to an embodiment of the present disclosure, a method for controlling an ice storage air-conditioning system is provided, which is applied to a controller of the ice storage air-conditioning system.

Ice storage technology is a complete set of technology that takes advantage of the low-peak hours of the power grid at night and uses low-priced electricity to make ice storage to store a cooling capacity. During the daytime when electricity consumption is at peak, the dissolved water is used together with the refrigeration unit to provide cooling. During a peak load of the air conditioner in the daytime, the stored cooling capacity is released to meet the peak load needs of air conditioning.

FIG. 1 shows a schematic diagram of an ice storage air-conditioning system. Referring to FIG. 1, the ice storage air-conditioning system includes a cold tank (which can also be called a cold storage tank), a dual duty chiller (that is, a water chilling unit having two chillers), two chilled water pumps, two plate heat exchangers and one control box (that is, a controller of the ice storage air-conditioning system), a passage of each apparatus is adjustable through valves V1-V5. Among them, the control box can control each valve and two chilled water pumps.

The cooling modes of the ice storage air-conditioning system shown in the figure may include a dual-condition chiller cooling mode, an ice-storage tank cooling mode, and a combined cooling mode of a dual duty chiller and an ice storage tank. Particularly, the dual-condition chiller cooling mode is that the water chilling unit is used to provide cooling, and the ice storage tank does not provide cooling. The ice-storage tank cooling mode is that the ice storage tank is used to provide cooling, and the water chilling unit does not provide cooling. The combined cooling mode of the dual duty chiller and the ice storage tank is that the ice storage tank and the water chilling unit are both used to provide cooling.

Based on the above description, referring to the flowchart of a method for controlling an ice storage air-conditioning system according to an embodiment of the present disclosure shown in FIG. 2, the method for controlling the ice storage air-conditioning system may include the following steps S202 and S204.

In step S202, parameters of the ice storage air-conditioning system in a current cooling mode are adjusted based on an outlet temperature of a plate heat exchanger of the ice storage air-conditioning system.

In step S204, the ice storage air-conditioning system is controlled to perform a cooling operation based on the parameters of the ice storage air-conditioning system.

In embodiments according to the present disclosure, the parameters of the ice storage air-conditioning system in each cooling mode can be adjusted at any time according to the outlet temperature of the plate heat exchanger of the ice storage air-conditioning system. Particularly, the parameters of the ice storage air-conditioning system may include an opening degree of each valve (i.e., the V1 valve to V5 valve in FIG. 1) and an operation frequency of the chilled water pump.

After the parameters of the ice storage air-conditioning system are determined based on the outlet temperature of the plate heat exchanger, the ice storage air-conditioning system may be controlled to perform the cooling operation based on the parameters of the ice storage air-conditioning system, so as to ensure that the supply water temperature of the ice storage air-conditioning system has small fluctuations and improve the user's experience.

According to the method for controlling the ice storage air-conditioning system provided by the embodiment of the present disclosure as shown in FIG. 2, the current cooling mode can be adjusted based on the outlet temperature of the plate heat exchanger of the ice storage air-conditioning system, and the ice storage air-conditioning system is controlled to perform the cooling operation based on the parameters of the ice storage air-conditioning system. In this method, the parameters of the ice storage air-conditioning system in the current cooling mode can be adjusted based on the outlet temperature of the plate heat exchanger, thereby a stable outlet water temperature in the ice storage air-conditioning system can be ensured and the user's experience can be improved.

Referring now to FIG. 3. The embodiment shown in FIG. 3 provides another method for controlling the ice storage air-conditioning system, which is implemented based on the embodiment shown in FIG. 2. As shown in the flowchart of another method for controlling the ice storage air-conditioning system in FIG. 3, the method for controlling the ice storage air-conditioning system in this embodiment may include the following steps S302, S304 and S306.

In step S302, a cooling mode of the ice storage air-conditioning system is determined based on a current power time period and/or an ice amount in the ice storage tank of the ice storage air-conditioning system.

In step S304, parameters of the ice storage air-conditioning system are adjusted in the current cooling mode based on qn outlet temperature of a plate heat exchanger of the ice storage air-conditioning system.

In step S306, the ice storage air-conditioning system is controlled to perform a cooling operation based on the parameters of the ice storage air-conditioning system.

The power time period may include a power wave flat period and a power wave peak period. Among them, the power wave flat period is generally 22:00-8:00, and the power wave peak period is generally 08:00-22:00. That is to say, the late-night period is the power wave flat period, and the daytime period is the power wave peak period. The ice amount in the ice storage tank of the ice storage air-conditioning system is the amount of ice stored in the ice storage tank. Only when the amount of ice stored in the ice storage tank is large, the ice storage tank can be used for cooling. Hence, the cooling mode of the ice storage air-conditioning system can be determined based on the current power time period and the ice storage tank of the ice storage air-conditioning system.

Particularly, in step S302, the current cooling mode of the ice storage air-conditioning system may be determined through the following steps: determining that the current cooling mode of the ice storage air-conditioning system is the dual-condition chiller cooling mode in response to a determination that the current power time period is in the power wave flat period, or the ice amount in the ice storage tank of the ice storage air-conditioning system is smaller than a preset first threshold; determining that the cooling mode of the ice storage air-conditioning system is the ice-storage tank cooling mode in response to a determination that the current power time period is in the power wave peak period, and the ice amount in the ice storage tank of the ice storage air-conditioning system is greater than a preset second threshold value; and determining that the current cooling mode of the ice storage air-conditioning system is the combined cooling mode of the dual duty chiller and the ice storage tank in response to a determination that the current power time period is in the power wave peak period and the ice amount in the ice storage tank of the ice storage air-conditioning system is smaller than a preset third threshold, or the current power time period is in the power wave flat period and the ice amount in the ice storage tank of the ice storage air-conditioning system is greater than a preset fourth threshold.

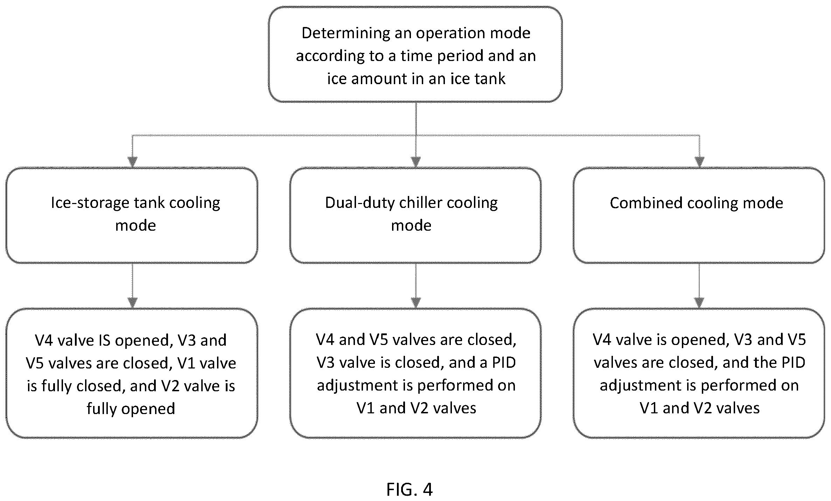

Referring to FIG. 4, a schematic diagram of determining the cooling mode of the ice storage system is shown. The ice storage air-conditioning system is determined to be in the dual-condition chiller cooling mode when the time period is in the power wave flat period or the ice amount in the ice storage tank is smaller than a lower threshold (that is, the first threshold, which may be 10%). As shown in FIG. 1, the V4 valve may be opened, the V3 and V5 valves are closed, the V1 valve is fully closed, and the V2 valve is fully opened.

The ice storage air-conditioning system is determined to be in the ice-storage tank cooling mode when the time period is in the power wave peak period and the ice amount in the ice storage tank is greater than a lower threshold (that is, the second threshold, which may be 10%). As shown in FIG. 1, the V4 valve may be opened, the V5 valve is closed, the V3 valve is closed, and a PID adjustment is performed on the V1 and V2 valves.

The ice storage air-conditioning system is determined to be in a combined cooling mode of a dual duty chiller and an ice storage tank when the time period is in the power wave peak period and the ice amount in the ice storage tank is smaller than a set threshold (i.e., the third threshold, which may be 30%), or the time period is in the power wave flat period and the ice amount in the ice storage tank is greater than a set threshold (i.e., the fourth threshold, which may be 80%). As shown in FIG. 1, the V4 valve may be opened, the V3 and V5 valves are closed, and the PID adjustment is performed on the V1 and V2 valves (an upper limit of the V1 valve is adjusted to 80%).

In step S304, parameters of the ice storage air-conditioning system in the current cooling mode may be adjusted based on an outlet temperature of a plate heat exchanger of the ice storage air-conditioning system.

Particularly, the parameters of the ice storage air-conditioning system are different under different cooling modes. For example, in case that the current cooling mode of the ice storage air-conditioning system is the dual-condition chiller cooling mode, steps for adjusting the parameters of the ice storage air-conditioning system in this cooling mode may include that: determining the number of operating water chilling units of the ice storage air-conditioning system based on an outlet water temperature and a current load rate of the ice storage air-conditioning system; determining the number of operating chilled water pumps of the ice storage air-conditioning system to be the same as the number of operating water chilling units; adjusting the operation frequency of the chilled water pump based on the outlet temperature of the plate heat exchanger of the ice storage air-conditioning system.

By way of example, when the time period is in the power wave flat period or the ice volume in the ice storage tank is smaller than the lower threshold (for example, 10%) the ice storage air-conditioning system is switched to operate in the dual-condition chiller cooling mode: the V4 valve is opened, the V3 and V5 valves are closed, the V1 valve is fully closed and the V2 valve is fully opened. Particularly, a target temperature of the ice storage air-conditioning system may be obtained. in response to a determination that the outlet temperature of the plate heat exchanger is greater than the sum of the target temperature and a preset first deviation value, then the operation frequency of the chilled water pump is increased; and in response to a determination that the outlet temperature of the plate heat exchanger is smaller than a difference value between the target temperature and the first deviation value, then the operation frequency of the chilled water pump is reduced.

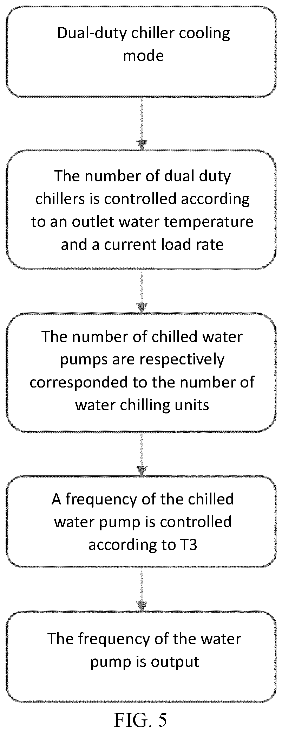

Referring to FIG. 5, which shows a schematic diagram of a control process for pumps and valves in a dual-condition chiller cooling mode. The dual duty chiller determines the number of operating water chilling units based on the outlet water temperature and the current load rate. The number of operating chilled water pumps is controlled corresponding to the number of operating water chilling units. The operation frequency of the chilled pump is controlled according to the outlet temperature T3 of the plate heat exchanger (which may also be referred to as a plate exchanger outlet temperature). The frequency of the chilled pump is increased when T3 > a target value (i.e., target temperature) + a fixed deviation (i.e., first deviation value). The frequency of the chilled pump is reduced when T3 < a set value - the fixed deviation.

For another example, in case that the cooling mode of the ice storage air-conditioning system is the ice-storage tank cooling mode, steps for adjusting the parameters of the ice storage air-conditioning system in the cooling mode include at least one of the following: adjusting an opening degree of the valve of the ice storage tank in the ice storage air-conditioning system based on the outlet temperature of the plate heat exchanger of the ice storage air-conditioning system; adjusting the operation frequency of the chilled water pump based on the outlet temperature of the plate heat exchanger of the ice storage air-conditioning system; and adjusting the number of operating chilled water pumps based on the outlet temperature of the plate heat exchanger of the ice storage air-conditioning system.

By way of example, when the time period is in the power wave peak period and the ice amount in the ice storage tank is greater than the lower threshold (for example, 10%), the ice storage air-conditioning system is switched to operate in the ice-storage tank cooling mode: the V4 and V5 valves are opened, the V3 valve is closed, and the V1 and V2 valves are PID adjusted. Particularly, the opening degree of the valve of the ice storage tank is increased in response to a determination that the outlet temperature of the plate heat exchanger is greater than a sum of the target temperature and a preset second deviation value. The opening degree of the valve of the ice storage tank is reduced in response to a determination that the outlet temperature of the plate heat exchanger is smaller than a difference value between the target temperature and the second deviation value. The number of operating chilled water pumps is increased in response to a determination that the outlet temperature of the plate heat exchanger is greater than a sum of the target temperature and a preset third deviation value. The number of operating chilled water pumps is reduced in response to a determination that the outlet temperature of the plate heat exchanger is smaller than a difference value between the target temperature and the third deviation value.

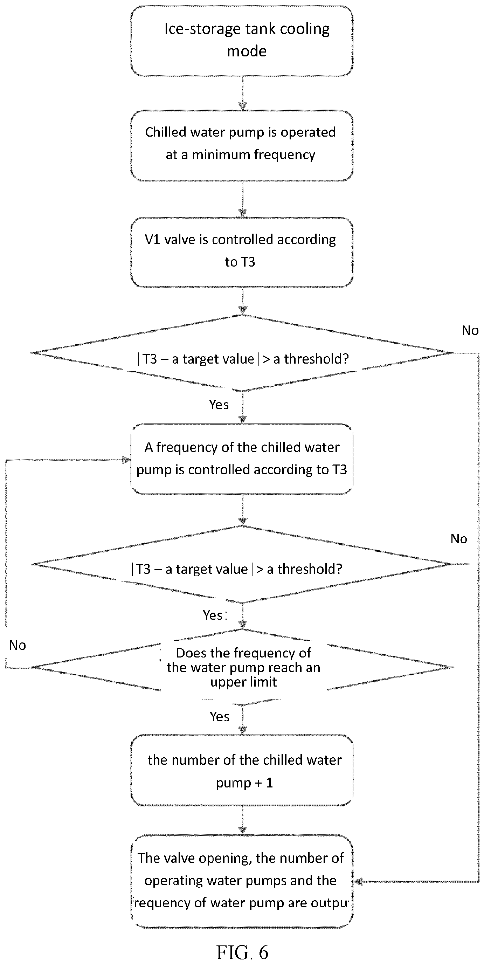

Referring to FIG. 6, which shows a schematic diagram of the control process for pumps and valves in an ice-storage tank cooling mode. The details of the pump-valve joint control method are as follows: 1) in case that the chilled pump is operated at the set minimum frequency (30Hz), then the V1 valve is adjusted based on the plate exchanger outlet temperature T3 as follows: the opening degree of the V1 valve is increased when T3 > the target value + the fixed deviation (i.e., second deviation value); and the opening degree of the V1 valve is reduced when T3 < the target value - the fixed deviation. 2) In case that the opening degree of the V1 valve reaches the set upper limit, then a frequency conversion control of the chilled water pump is started, and the operation frequency is adjusted based on the plate exchanger outlet temperature T3 as follows: the frequency of the chilled pump is increased when T3 > the target value + the fixed deviation (i.e., the third deviation value); and the frequency of the chilled pump is reduced when T3 < the target value - the fixed deviation. 3) In case that the chilled pump frequency is adjusted to the upper limit (such as 50Hz) and T3 > the target value + the fixed deviation, then the number of operating chilled pumps + 1. In case that the frequency of the chilled pump is adjusted to the lower limit (such as 30Hz) and T3 < the target value - the fixed deviation, then the number of operating chilled pumps - 1.

When the time period is in the power wave peak period and the ice volume in the ice storage tank is smaller than the set threshold (for example, 30%), or when the time period is in the power wave flat period and the ice volume in the ice storage tank is greater than the set threshold (for example, 80%), the ice storage air-conditioning system is switched to operate in the combined cooling mode of the dual duty chiller and the ice storage tank: the V4 valve is opened, the V3 and V5 valves are closed, and the V1 and V2 valves are PID adjusted (the upper limit of the V1 valve is adjusted to 80%).

For another example, in response to a determination that the current cooling mode of the ice storage air-conditioning system is the combined cooling mode of the dual duty chiller and the ice storage tank, then steps for adjusting parameters of the ice storage air conditioner in the current cooling mode based on the outlet temperature of the plate heat exchanger of the ice storage air-conditioning system include that: determining the number of operating water chilling units of the ice storage air-conditioning system based on the outlet water temperature and the current load rate of the ice storage air-conditioning system; determining the number of operating chilled water pumps of the ice storage air-conditioning system to be the same as the number of operating water chilling units; adjusting the opening degree of the valve of the ice storage tank in the ice storage air-conditioning system based on the outlet temperature of the plate heat exchanger of the ice storage air-conditioning system; and adjusting the operation frequency of the chilled water pump based on the outlet temperature of the plate heat exchanger of the ice storage air-conditioning system in response to a determination that the opening degree of the valve is adjusted to a preset limit of the opening degree.

Particularly, in response to a determination that the opening degree of the valve is adjusted to the preset limit of the opening degree, the step of adjusting the operation frequency of the chilled water pump based on the outlet temperature of the plate heat exchanger of the ice storage air-conditioning system includes: increasing the operation frequency of the chilled water pump based on the outlet temperature of the plate heat exchanger of the ice storage air-conditioning system in response to a determination that the opening degree of the valve is increased to a preset upper limit of the opening degree; and reducing the operation frequency of the chilled water pump based on the outlet temperature of the plate heat exchanger of the ice storage air-conditioning system in response to a determination that the opening degree of the valve is reduced to a preset upper limit of the opening degree ;

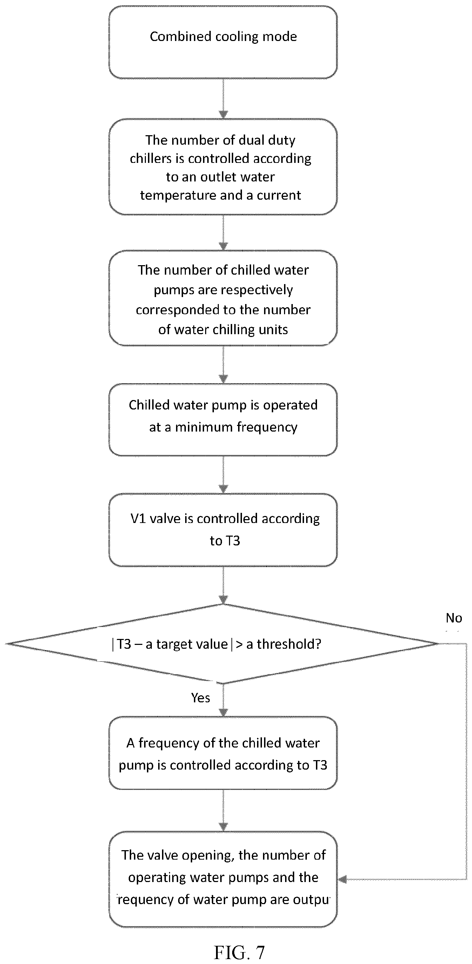

Referring to FIG. 7, which shows a schematic diagram of a control process for pumps and valves in a combined cooling mode of a dual duty chiller and an ice storage tank. The dual duty chiller determines the number of operating water chilling units based on a return water temperature and a current load rate. The number of operating chilled water pumps is controlled corresponding to the number of operating water chilling units. The details of the pump-valve joint control method are as follows: 1) the chilled pump is operated at the set minimum frequency (30Hz), and the V1 valve is adjusted according to the plate exchanger outlet temperature T3 as follows: the opening degree of the V1 valve is increased when T3 > the target value + the fixed deviation (i.e., second deviation value); and the opening degree of the V1 valve is reduced when T3 < the target value - the fixed deviation. 2) The opening degree of the V1 valve reaches the set upper limit, a frequency conversion control of the chilled water pump is started, and the operation frequency is adjusted according to the plate exchanger outlet temperature T3 as follows: the frequency of the chilled pump increases when T3 > the target value + the fixed deviation (i.e., the third deviation value); and the frequency of the chilled pump reduces when T3 < the target value - the fixed deviation.

In step S306, the ice storage air-conditioning system may be controlled to perform a cooling operation based on the adjusted parameters of the ice storage air-conditioning system.

The above method provided by the embodiment of the present disclosure proposes an intelligent and undisturbed method for controlling the ice storage air-conditioning system. First, under different operation modes, the target parameters of the ice tank inlet regulating valve and water pump frequency are set from multiple variables to unified variables, and a joint control of pumps and valves is achieved by means of a cascade control to ensure a stable control of the outlet temperature of the chilled water from the plate exchanger while minimizing the energy consumption of the chilled water pump.

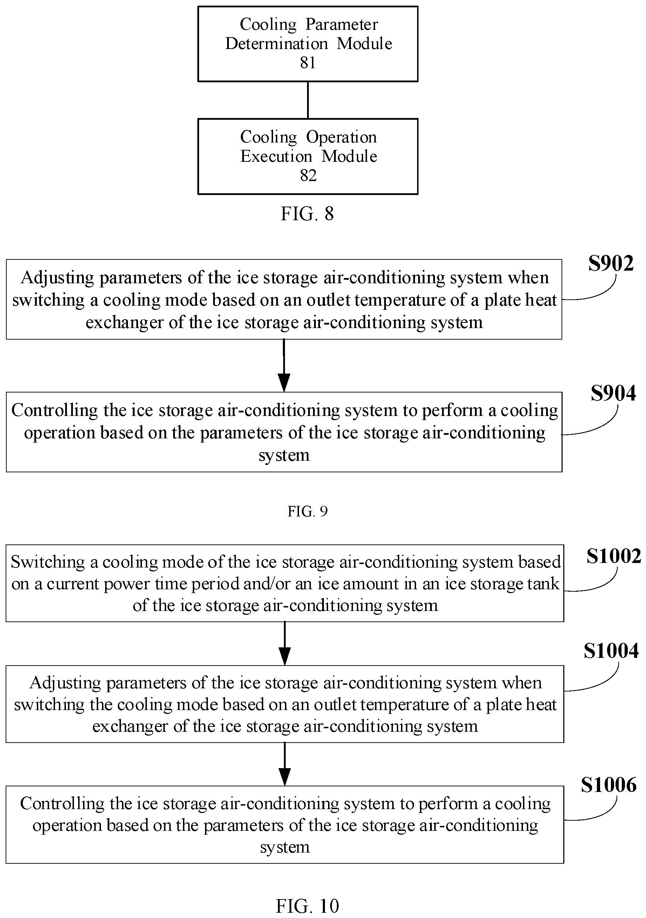

Corresponding to the method for controlling the ice storage air-conditioning system provided according to some embodiments of the present disclosure, embodiments of the present disclosure provide a device for controlling an ice storage air-conditioning system, which is applied to the controller of the ice storage air-conditioning system, Referring to FIG. 8, which shows a schematic structural diagram of a device for controlling an ice storage air-conditioning system, the device for controlling the ice storage air-conditioning system may include: a cooling parameter determination module 81 and a cooling operation execution module 82.

The cooling parameter determination module 81 is configured to adjust parameters of the ice storage air-conditioning system in a current cooling mode based on an outlet temperature of the plate heat exchanger of the ice storage air-conditioning system.

The cooling operation execution module 82 is configured to control the ice storage air-conditioning system to perform a cooling operation based on the parameters of the ice storage air-conditioning system.

The device for controlling the ice storage air-conditioning system provided by the embodiment of the present disclosure can adjust the current cooling mode based on the outlet temperature of the plate heat exchanger of the ice storage air-conditioning system, and control the ice storage air-conditioning system to perform the cooling operation based on the parameters of the ice storage air-conditioning system. In this control, the parameters of the ice storage air-conditioning system in the current cooling mode can be adjusted based on the outlet temperature of the plate heat exchanger, so that a stable outlet water temperature in the ice storage air-conditioning system can be ensured and the user's experience can be improved.

In case that the current cooling mode of the above ice storage air-conditioning system is the dual-condition chiller cooling mode, then the above cooling parameter determination module is configured to determine the number of operating water chilling units of the ice storage air-conditioning system based on the outlet water temperature and the current load rate of the ice storage air-conditioning system; determine the number of operating chilled water pumps of the ice storage air-conditioning system to be the same as the number of operating water chilling units; and adjust the operation frequency of the chilled water pump based on the outlet temperature of the plate heat exchanger of the ice storage air-conditioning system.

The above cooling parameter determination module is configured to obtain a target temperature of the ice storage air-conditioning system; increase the operation frequency of the chilled water pump in response to a determination that the outlet temperature of the plate heat exchanger is greater than a sum of the target temperature and a preset first deviation value; and, reduce the operation frequency of the chilled water pump in response to a determination that the outlet temperature of the plate heat exchanger is smaller than a difference value between the target temperature and the first deviation value.

In case that the current cooling mode of the above ice storage air-conditioning system is the ice-storage tank cooling mode, then the above cooling parameter determination module is at least configured for one of the following: adjusting an opening degree of the valve of the ice storage tank in the ice storage air-conditioning system based on the outlet temperature of the plate heat exchanger of the ice storage air-conditioning system; adjusting the operation frequency of the chilled water pump based on the outlet temperature of the plate heat exchanger of the ice storage air-conditioning system; and adjusting the number of operating chilled water pumps based on the outlet temperature of the plate heat exchanger of the ice storage air-conditioning system.

The above cooling parameter determination module is configured to: increase the opening degree of the valve of the ice storage tank in response to a determination that the outlet temperature of the plate heat exchanger is greater than a sum of the target temperature and a preset second deviation value; reduce the opening degree of the valve of the ice storage tank in response to a determination that the outlet temperature is smaller than a difference value between the target temperature and the second deviation value. The above cooling parameter determination module is configured to: increase the number of operating chilled water pumps in response to a determination that the outlet temperature of the plate heat exchanger is greater than a sum of the target temperature and a preset third deviation value; and reduce the number of operating chilled water pumps in response to a determination that the outlet temperature of the plate heat exchanger is smaller than the difference value between the target temperature and the third deviation value.

In case that the current cooling mode of the above ice storage air-conditioning system is the combined cooling mode of the dual duty chiller and the ice storage tank, then the above cooling parameter determination module is configured to determine the number of operating water chilling units of the ice storage air-conditioning system based on the outlet water temperature and the current load rate of the ice storage air-conditioning system; determine the number of operating chilled water pumps of the ice storage air-conditioning system to be the same as the number of operating water chilling units; adjust the opening degree of the valve of the ice storage tank in the ice storage air-conditioning system based on the outlet temperature of the plate heat exchanger of the ice storage air-conditioning system; and adjust the operation frequency of the chilled water pump based on the outlet temperature of the plate heat exchanger of the ice storage air-conditioning system in response to a determination that the opening degree of the valve is adjusted to a preset limit of the opening degree.

The above cooling parameter determination module is configured to: increase the operation frequency of the chilled water pump based on the outlet temperature of the plate heat exchanger of the ice storage air-conditioning system in response to a determination that the opening degree of the valve is increased to a preset upper limit of the opening degree; and reduce the operation frequency of the chilled water pump based on the outlet temperature of the plate heat exchanger of the ice storage air-conditioning system in response to a determination that the opening degree of the valve is reduced to a preset upper limit of the opening degree.

The above device also includes: a current cooling mode determination module, which is configured to determine a current cooling mode of the ice storage air-conditioning system based on a current power time period and/or an ice volume in the ice storage tank of the ice storage air-conditioning system.

The above current cooling mode determination module is configured to: determine that the current cooling mode of the ice storage air-conditioning system is a dual-condition chiller cooling mode in response to a determination that the current power time period is in a power wave flat period, or the ice amount in the ice storage tank of the ice storage air-conditioning system is smaller than a preset first threshold; determine that the current cooling mode of the ice storage air-conditioning system is the ice-storage tank cooling mode in response to a determination that the current power time period is in the power wave peak period and the ice amount in the ice storage tank of the ice storage air-conditioning system is greater than a preset second threshold; and determine that the current cooling mode of the ice storage air-conditioning system is the combined cooling mode of the dual duty chiller and the ice storage tank in response to a determination that the current power time period is in the power wave peak period and the ice amount in the ice storage tank of the ice storage air-conditioning system is smaller than a preset third threshold, or the current power time period is in the power wave flat period and the ice amount in the ice storage tank of the ice storage air-conditioning system is greater than a preset fourth threshold.

It can be clearly understood for persons skilled in the art that, for the convenience and simplicity of description, the specific working process of the device for controlling the ice storage air-conditioning system described above may be referred to the corresponding embodiments of the method for controlling the ice storage air-conditioning system, which will not be repeated in here.

The following describes in detail the method for controlling the ice storage air-conditioning system provided by other embodiments of the present disclosure with reference to FIGS. 9 to 12. The method for controlling the ice storage air-conditioning system particularly relates to an intelligent undisturbed switching method for controlling the ice storage air-conditioning system. This method can ensure a stable control of the outlet temperature of the chilled water from the plate exchanger while minimizing the energy consumption of the chilled water pump.

Referring to the flowchart of a method for controlling an ice storage air-conditioning system shown in FIG. 9, the method for controlling the ice storage air-conditioning system includes the following steps S902 and S904.

In step S902, parameters of the ice storage air-conditioning system are adjusted when switching a cooling mode based on an outlet temperature of a plate heat exchanger of the ice storage air-conditioning system.

In step S904, the ice storage air-conditioning system is controlled to perform a cooling operation based on the parameters of the ice storage air-conditioning system.

In the embodiment of the present disclosure, the parameters of the ice storage air-conditioning system when switching can be adjusted the cooling mode according to the outlet temperature of the plate heat exchanger of the ice storage air-conditioning system. Particularly, the parameters of the ice storage air-conditioning system may include an opening degree of each valve (i.e., the V1 valve to V5 valve in FIG. 1) and an operation frequency of a chilled water pump.

In step S904, the ice storage air-conditioning system may be controlled to perform the cooling operation based on parameters of the ice storage air-conditioning system.

After the parameters of the ice storage air-conditioning system are adjusted according to the outlet temperature of the plate heat exchanger, the ice storage air-conditioning system can be controlled according to the parameters of the ice storage air-conditioning system to perform the cooling operation, so as to ensure that the supply water temperature of the ice storage air-conditioning system has small fluctuations and improve the user's experience.

According to the method for controlling the ice storage air-conditioning system provided by the embodiment of the present disclosure, the parameters of the ice storage air-conditioning system when switching the cooling mode can be adjusted based on the outlet temperature of the plate heat exchanger of the ice storage air-conditioning system, and the ice storage air-conditioning system can be controlled to perform the cooling operation based on the parameters of the ice storage air-conditioning system. In this method, the parameters of the ice storage air-conditioning system when switching the cooling mode can be adjusted based on the outlet temperature of the plate heat exchanger, so that a stable outlet water temperature in the ice storage air-conditioning system can be ensured and the user's experience can be improved.

Referring now to FIG. 10. FIG. 10 shows another method for controlling the ice storage air-conditioning system provided according to an embodiment of the present disclosure, this method is implemented based on the embodiment shown in FIG. 9. with reference to the flowchart of another method for controlling the ice storage air-conditioning system shown in FIG. 10, the method for controlling the ice storage air-conditioning system in this embodiment may include the following steps S1002, S1004 and S1006.

In step S1002, a cooling mode of the ice storage air-conditioning system is switched based on a current power time period and/or an ice amount in an ice storage tank of the ice storage air-conditioning system.

In step S1004, parameters of the ice storage air-conditioning system are adjusted when switching the cooling mode based on an outlet temperature of a plate heat exchanger of the ice storage air-conditioning system.

In step S1006, the ice storage air-conditioning system is controlled to perform a cooling operation based on the parameters of the ice storage air-conditioning system.

According to the above embodiments of the present disclosure, a method for an intelligent undisturbed mode switching is provided, for example, the cooling mode of the ice storage air-conditioning system is switched from the dual-condition chiller cooling mode to the ice-storage tank cooling mode, or alternatively, the cooling mode of the ice storage air-conditioning system is switched from the ice-storage tank cooling mode to the dual-condition chiller cooling mode.

In the step S1004, the parameters of the ice storage air-conditioning system when switching the cooling mode may be adjusted based on the outlet temperature of the plate heat exchanger of the ice storage air-conditioning system.

For switching from the dual-condition chiller cooling mode to the ice-storage tank cooling mode, the following steps may be performed: maintaining a working status of the chilled water pump of the ice storage air-conditioning system, and adjusting a valve of the ice storage tank and a regulating valve of the plate heat exchanger in the ice storage air-conditioning system, among them, an opening degree of the valve of the ice storage tank and an opening degree of the regulating valve of the plate heat exchanger are determined both based on the outlet temperature of the plate heat exchanger; and switching off the water chilling units and cooling water pumps and cooling water towers of the ice storage air-conditioning system.

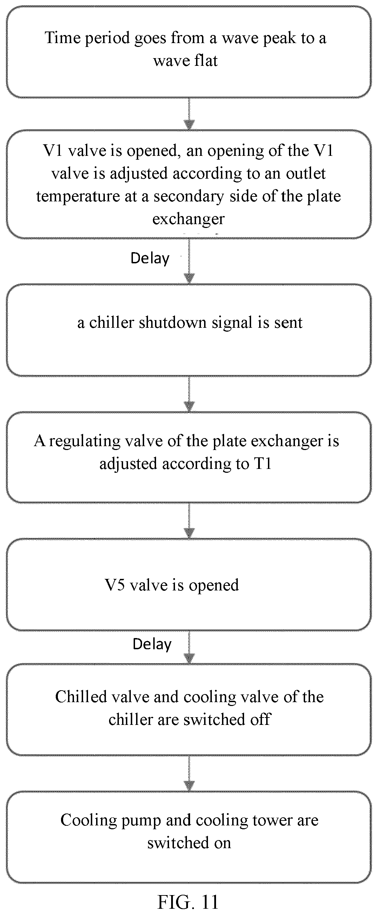

Referring to FIG. 11, which shows a schematic diagram of a control process for switching from a dual duty cooling mode to an ice-storage tank cooling mode. The ice storage air-conditioning system is switched to operate in the ice-storage tank cooling mode when the time period is in the power wave peak period and the ice amount in the ice storage tank is greater than the lower threshold (for example, 10%). In order to ensure uninterrupted operation of cooling, the chilled pump continues to operate. The controller may first open the V1 valve, and the opening degree of the V1 valve is adjusted according to the outlet temperature T3 of the secondary side of the plate exchanger. Secondly, a chiller shutdown signal is sent by the controller, and the regulating valve of the plate exchanger is adjusted according to T3. After the controller collects feedback that the chiller is shut down, the V5 valve is opened to allow the chilled water to flow directly into the ice tank. After a period of delay (usually set to 5 minutes), a chilled valve and a cooling valve of the chiller are closed respectively. After the cooling valve is closed in place, the cooling pump and cooling tower are closed in sequence. During the mode switch process, it can be ensured that a temperature fluctuation of T3 does not exceed $\pm 0.5°C$ as the V1 valve is PID adjusted based on the plate exchanger outlet temperature T3 all the time.

For switching from the ice-storage tank cooling mode to the dual-condition chiller cooling mode, the following steps may be performed: determining the number of operating water chilling units of the ice storage air-conditioning system after mode switching; switching on the number of operating water chilling units and cooling water pumps and cooling water towers; adjusting the opening degree of the valve of the ice storage tank in the ice storage air-conditioning system based on the outlet water temperature of the water chilling units and the outlet temperature of the plate heat exchanger.

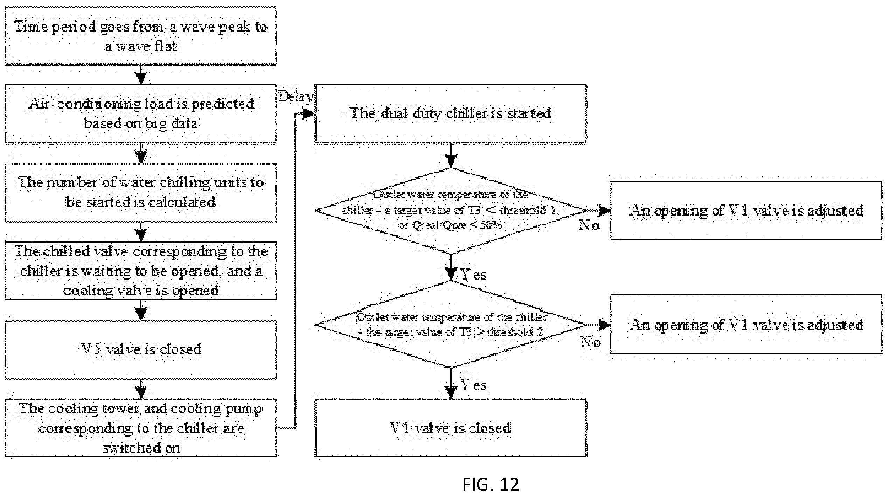

Referring to FIG. 12, which shows a schematic diagram of the control process of switching the ice-storage tank cooling mode to the dual-condition cooling mode, the controller may establish an hourly load prediction model based on historical load data and outdoor weather data: $Q_{t+1} = f(Q_t, T_{db,out,t}, R_{hout,t}, S_t)$, where t represents a current moment, t+1 represents a next moment, Q is an air conditioning load, $T_{db,out,t}$ is an outdoor dry bulb temperature at the current moment, $R_{h,out,t}$ is an outdoor relative humidity at the current moment, and $S_t$ is a solar radiation intensity at the current moment.

Particularly, the number of operating water chilling units of the ice storage air-conditioning system after mode switching may be determined; the number of operating water chilling units, cooling water pumps and cooling water towers may be switched on; and the opening degree of the valve of the ice storage tank in the ice storage air-conditioning system may be adjusted based on the outlet water temperature of the water chilling unit and the outlet temperature of the plate heat exchanger.

The number of operating water chilling units of the ice storage air-conditioning system after mode switching can be determined through the following steps: obtaining a load before the mode switching of the ice storage air-conditioning system; determining a predicted load after the mode switching of the ice storage air-conditioning system based on the load before switching and a pre-established load prediction model; determining the number of operating water chilling units after the mode switching of the ice storage air-conditioning system based on the predicted load after the mode switching.

One hour before the time period of switching from the ice-storage tank cooling mode to the dual-condition chiller cooling mode, the BMS system first calculates a load of the current air conditioning system value based on a temperature difference T4-T3 of the return chilled water at the secondary side and a chilled water flow rate Mch at the secondary side, and then predict the air conditioning load for the next hour based on the above equation. At the same time, based on the predicted air-conditioning load and the dual duty chiller rated load, the number N of chillers that will be started at the next moment can be determined. In the time period of switching from the ice-storage tank cooling mode to the dual-condition chiller cooling mode, the BMS system issues control instructions based on the prediction results to switch on the chilled valve and cooling valve corresponding to the chiller to be started in advance. After the chilled valve and cooling valve of each chiller are switched on in place, the V5 valve is closed and the corresponding cooling tower and cooling pump of the chiller are switched on in sequence. After a period of delay (usually set to 5 minutes), the N dual duty chillers are started.

Particularly, the parameter adjustment may be performed through the following steps: obtaining an actual load of the ice storage air-conditioning system after mode switching; increasing the opening degree of the valve of the ice storage tank in the ice storage air-conditioning system if a value obtained by subtracting the outlet water temperature of the water chilling unit with the outlet temperature of the plate heat exchanger is greater than a preset first threshold, or a ratio of the predicted load and the actual load after the mode is switched is smaller than a preset ratio threshold; and reducing the opening degree of the valve of the ice storage tank in the ice storage air-conditioning system if the ratio of the predicted load and the actual load after the mode is switch is greater than the ratio threshold; and closing the valve of the ice storage tank of the ice storage air-conditioning system if an absolute value of the difference value between the outlet water temperature of the water chilling unit and the outlet temperature of the plate heat exchanger is smaller than a preset second threshold.

When the outlet water temperature of the chiller - a target value of T3 ≥ a threshold 1 (set as 3°C), or Qreal/Qpre < 50% (the real cooling load / the predicted cooling load), it is indicated that the chiller is just loaded and the load rate of the chiller is relatively low and the outlet water temperature of the chiller is high, in this case, the PID adjustment is performed on the V1 valve according to T3, to ensure the stability of T3 temperature. When Qreal/Qpre > 50%, it is indicated that the load of the chiller has reached a certain stage, in this case, the ice tank will always bear part of the load if the upper limit of the V1 valve is not limited, and the load of the chiller cannot continue to be loaded. At this time, the opening degree of the valve of the ice storage tank in the ice storage air-conditioning system can be determined by the following formula:

$$V1,ub = (Tch,out - Tice,out) / (Tch,out - T3 + Tcomp).$$

In the formula, V1,ub is the upper limit of the opening degree of the valve of the ice storage tank in the ice storage air-conditioning system, that is, the upper limit of the V1 valve, Tch,out is the outlet water temperature of the water chilling unit, Tice,out is the outlet water temperature of the ice storage tank, T3 is the outlet temperature of the plate heat exchanger, Tcomp is a preset compensation temperature, and Tcomp may reflect a temperature difference of the plate heat exchanger.

When |the outlet water temperature of the chiller - the target value of T3| < a threshold 2 (set to 0.5°C), it is indicated that the dual duty chiller has dropped the water temperature to a required range, the V1 valve is closed, and the process of non-disruptive switching control is terminated.

According to the above method provided by the embodiment of the present disclosure, an intelligent undisturbed switching method for controlling the ice storage air-conditioning system is proposed. When a switching of the cooling mode is in need (switching from the ice-storage tank cooling mode to the dual-condition chiller cooling mode or switching from the dual-condition chiller cooling mode to the ice-storage tank cooling mode), the corresponding intelligent undisturbed switching control strategy is executed, which ensures that the fluctuation range of water temperature does not exceed ± 0.5°C.

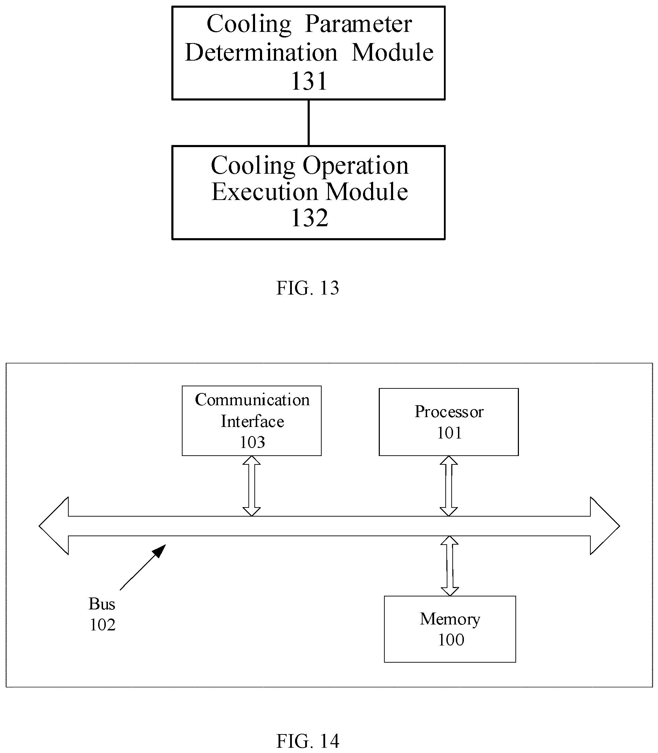

Corresponding to the method for controlling the ice storage air-conditioning system in other embodiments of the present application, embodiments of the present disclosure also provide a device for controlling an ice storage air-conditioning system, which is applied to the controller of the ice storage air-conditioning system, Referring to the schematic structural diagram of a device for controlling an ice storage air-conditioning system shown in FIG. 13, the device for controlling the ice storage air-conditioning system may include: a cooling parameter determination module 131 and a cooling operation execution module 132.

The cooling parameter determination module 131 is configured to adjust parameters of the ice storage air-conditioning system when switching a cooling mode based on an outlet temperature of a plate heat exchanger of the ice storage air-conditioning system.

The cooling operation execution module 132 is configured to control the ice storage air-conditioning system to perform a cooling operation based on the parameters of the ice storage air-conditioning system.

The device for controlling the ice storage air-conditioning system provided by the embodiment of the present disclosure can adjust the parameters of the ice storage air-conditioning system when switching the cooling mode based on the outlet temperature of the plate heat exchanger of the ice storage air-conditioning system, and the ice storage air-conditioning system can be controlled to perform the cooling operation based on the parameters of the ice storage air-conditioning system. In this method, the parameters of the ice storage air-conditioning system when switching the cooling mode can be adjusted based on the outlet temperature of the plate heat exchanger, so that a stable outlet water temperature in the ice storage air-conditioning system can be ensured and the user's experience can be improved.

In case that the cooling mode of the ice storage air-conditioning system is switched from the dual-condition chiller cooling mode to the ice-storage tank cooling mode, the above cooling parameter determination module is configured to maintain a working status of the chilled water pump of the ice storage air-conditioning system and adjust a valve of the ice storage tank and a regulating valve of the plate heat exchanger in the ice storage air-conditioning system, where an opening degree of the valve of the ice storage tank and an opening degree of the regulating valve of the plate heat exchanger are determined both based on the outlet temperature of the plate heat exchanger; and shutdown the water chilling units, cooling water pumps and cooling water towers of the ice storage air-conditioning system.

In case that the cooling mode of the ice storage air-conditioning system is switched from the ice-storage tank cooling mode to the dual-condition chiller cooling mode, the above cooling parameter determination module is configured to determine the number of operating water chilling units of the ice storage air-conditioning system after mode switching; switch on the number of operating water chilling units and cooling water pumps and cooling water towers; adjust the opening degree of the valve of the ice storage tank in the ice storage air-conditioning system based on an outlet water temperature of the water chilling unit and the outlet temperature of the plate heat exchanger.

The above cooling parameter determination module is configured to obtain a load before the mode switching of the ice storage air-conditioning system; determine a predicted load after the mode switching of the ice storage air-conditioning system based on the load before switching and a pre-established load prediction model; and determine the number of operating water chilling units after the mode switching of the ice storage air-conditioning system based on the predicted load after the mode switching.

The above cooling parameter determination module is configured to obtain an actual load of the ice storage air-conditioning system after the mode switching; increase the opening degree of the valve of the ice storage tank in the ice storage air-conditioning system in response to a determination that the outlet water temperature of the water chilling unit subtracted by the outlet temperature of the plate heat exchanger is greater than a preset first threshold, or a ratio of the predicted load to the actual load after the mode switching is smaller than a preset ratio threshold; reduce the opening degree of the valve of the ice storage tank in the ice storage air-conditioning system in response to a determination that the ratio of the predicted load to the actual load after the mode switching is greater than the ratio threshold; close the valve of the ice storage tank of the ice storage air-conditioning system in response to a determination that an absolute value of the difference value between the outlet water temperature of the water chilling unit and the outlet temperature of the plate heat exchanger is smaller than a preset second threshold.

The above cooling parameter determination module is configured to determine the opening degree of the valve of the ice storage tank in the ice storage air-conditioning system through the following formula: $V1,ub = (Tch,out - Tice,out) / (Tch,out - T3 + Tcomp)$; where, $V1,ub$ is the upper limit of the opening degree of the valve of the ice storage tank in the ice storage air-conditioning system, $Tch,out$ is the outlet water temperature of the water chilling unit, $Tice,out$ is an outlet water temperature of the ice storage tank, $T3$ is the outlet temperature of the plate heat exchanger, and $Tcomp$ is the preset compensation temperature.

The above device also includes: a cooling mode switching module, which is configured to switch the cooling mode of the ice storage air-conditioning system based on a current power time period and/or an ice amount in the ice storage tank of the ice storage air-conditioning system.

The above cooling mode switching module is configured to switch the cooling mode of the ice storage air-conditioning system from the dual-condition chiller cooling mode to the ice-storage tank cooling mode; or switch the cooling mode of the ice storage air-conditioning system from the ice-storage tank cooling mode to the dual-condition chiller cooling mode.

It can be clearly understood for persons skilled in the art that, for the convenience and simplicity of description, the specific working process of the device for controlling the ice storage air-conditioning system described above may be referred to the corresponding embodiments of the method for controlling the ice storage air-conditioning system, which will not be repeated in here.

An embodiment of the present disclosure also provides electronic equipment for executing the control method for the ice storage air-conditioning system. Referring to FIG. 14, a schematic structural diagram of the electronic equipment is shown, the electronic equipment includes a memory 100 and a processor 101. The memory 100 is configured to store one or more computer instructions, and the one or more computer instructions, when executed by the processor 101 enable(s) the method for controlling the ice storage air-conditioning system according to some embodiments of the present disclosure as described above and/or the method for controlling the ice storage air-conditioning system according to other embodiments of the present disclosure as described above to be implemented.

Further, the electronic equipment shown in FIG. 14 also includes a bus 102 and a communication interface 103. The processor 101, the communication interface 103 and the memory 100 are connected through the bus 102.

In this disclosure, the memory 100 may include a high-speed random-access memory (RAM, Random Access Memory), and may also include a non-volatile memory (non-volatile memory), such as at least one disk memory. The communication connection between the system network element and at least one other network element is realized through at least one communication interface 103 (which may be wired or wireless), and the Internet, wide area network, local network, metropolitan area network, etc. may be used. The bus 102 may be an ISA bus, a PCI bus, an EISA bus, etc. The bus may be divided into an address bus, a data bus, a control bus, etc. For ease of presentation, only one bidirectional arrow is used in FIG. 14, but it does not mean that there is only one bus or one type of bus.

The processor 101 may be an integrated circuit chip having signal processing capabilities. During an implementation process, each step of the above method may be completed by instructions in the form of hardware integrated logic circuits or software in the processor 101. The above processor 101 may be a general-purpose processor, including a central processing unit (Central Processing Unit, CPU for short), a network processor (Network Processor, NP for short), etc.; and may also be a digital signal processor (Digital Signal Processor, DSP for short). ), an application specific integrated circuit (Application Specific Integrated Circuit, ASIC for short), a field-programmable gate array (Field-Programmable Gate Array, FPGA for short) or other programmable logic devices, discrete gate or transistor logic devices, and discrete hardware components. Each disclosed method, step and logical block diagram in the embodiment of the present disclosure may be implemented or executed. The general-purpose processor may be a microprocessor or the processor may be any conventional processor, etc. The steps of the method disclosed in conjunction with the embodiments of the present disclosure may be directly implemented by a hardware decoding processor, or executed by a combination of hardware and software modules in the decoding processor. The software module may be located in a random-access memory, a flash memory, a read-only memory, a programmable read-only memory or an electrically erasable programmable memory, a register and other mature storage media in this field. The storage medium is located in the memory 100. The processor 101 reads information in the memory 100 and completes steps of the method in the foregoing embodiment in combination with the hardware of the processor

Embodiments of the present disclosure also provide a computer-readable storage medium in which computer-executable instructions are stored. When the computer-executable instructions are invoked and executed by the processor, the computer-executable instructions cause the processor to implement the method for controlling the ice storage air-conditioning system according to some embodiments of the present disclosure as described above and/or the method for controlling the ice storage air-conditioning system according to other embodiments of the present disclosure as described above. For specific implementation, reference may be made to the method embodiments, which will not be described in detail here.

The computer program products of the method for controlling the ice storage air-conditioning system, the device and the electronic equipment provided by the embodiments of the present disclosure include a computer-readable storage medium that stores a program code. The instructions included in the program code may be used to execute the method for controlling the ice storage air-conditioning system of some disclosed embodiments and/or the method for controlling the ice storage air-conditioning system according to other embodiments of the present disclosure as described above. For specific implementation, reference may be made to the method embodiments, which will not be described in detail here.

It can be clearly understood for persons skilled in the art that, for the convenience and simplicity of description, the specific working process of the device for controlling the ice storage air-conditioning system described above may be referred to the corresponding embodiments of the method for controlling the ice storage air-conditioning system, which will not be repeated in here.

In addition, in the description of the embodiments of the present disclosure, unless otherwise clearly stated and limited, the terms "installation", "connection" and "coupled" should be understood in a broad sense. For example, it may be a fixed connection or a detachable connection, or being integrally connected; it may be a mechanical connection or an electrical connection; it may be a direct connection or an indirect connection through an intermediate medium; it may be an internal connection between two components. For persons of ordinary skill in the art, the specific meanings of the above terms in this disclosure can be understood on a case-by-case basis.

The functions, if implemented in the form of software functional units and sold or used as independent products, may be stored in a computer-readable storage medium. Based on this understanding, the technical solution of the present disclosure is essentially or the part that contributes to the relevant technology or the part of the technical solution may be embodied in the form of a software product. The computer software product is stored in a storage medium and includes several instructions configured to cause a computer device (which may be a personal computer, a server, or a network device, etc.) to execute all or part of the steps of the methods described in various embodiments of the present disclosure. The aforementioned storage media include: a U disk, a mobile hard disk, a read-only memory (ROM, Read-Only Memory), a random-access memory (RAM, Random Access Memory), a magnetic disk or n optical disk and other media that can store a program code.

In the description of the present disclosure, it should be noted that the orientation or positional relationship indicated by terms, such as "center", "upper", "lower", "left", "right", "vertical", "horizontal", "inner", "outer", etc. is based on the orientation or positional relationship shown in the drawings, which is used only for the convenience of describing the present disclosure and simplifying the description and does not indicate or imply that the device or element referred to must have a specific orientation or be constructed or operated in a specific orientation, and thus should not be construed as limitations on the present disclosure. Furthermore, the terms "first", "second" and "third" are used for descriptive purposes only and should not be construed as indicating or implying relative importance.

Finally, it should be noted that the foregoing embodiments are only specific implementations of the present disclosure that used to illustrate the technical solutions of the present disclosure rather than being intended to limit them. The protection scope of the present disclosure is not limited thereto. Notwithstanding the detailed description of this disclosure by reference to the foregoing embodiments, persons of ordinary skill in the art should understand that it is still possible for any person familiar with this technical field to modify the technical solutions or to easily conceive changes recorded in the foregoing embodiments or to equivalently substitute some of the technical features within the technical scope disclosed in the present disclosure; and these modifications, changes or substitutions do not cause the essence of the corresponding technical solutions to deviate from the spirit and scope of the technical solutions of the embodiments of the present disclosure, and shall all be included within the protection scope of the present disclosure. Therefore, the protection scope of the present disclosure should be determined by the protection scope of the claims.

**Industrial applicability**

This application provides a method and a device for controlling an ice storage air-conditioning system, and electronic equipment. In the present application, the method is applied to a controller of the ice storage air-conditioning system. The method includes steps of: adjusting parameters of the ice storage air-conditioning system in a current cooling mode based on an outlet temperature of a plate heat exchanger of the ice storage air-conditioning system; and control the ice storage air-conditioning system to perform a cooling operation based on the parameters of the ice storage air-conditioning system. In this method, the parameters of the ice storage air-conditioning system in the current cooling mode can be adjusted based on the outlet temperature of the plate heat exchanger, thereby a stable outlet water temperature in the ice storage air-conditioning system can be ensure and the user's experience can be improved.

In addition, it should be understood that the method and device for controlling the ice storage air-conditioning system, and the electronic equipment of the present application are reproducible and can be used in a variety of industrial applications. For example, the method and device for controlling the ice storage air-conditioning system, and the electronic equipment of the present application can be applied to the technical field of air conditioning systems.

**Claims**

1. A method for controlling an ice storage air-conditioning system, applied to a controller of the ice storage air-conditioning system, the method comprising:

   adjusting parameters of the ice storage air-conditioning system in a current cooling mode based on an outlet temperature of a plate heat exchanger of the ice storage air-conditioning system; and
   controlling the ice storage air-conditioning system to perform a cooling operation based on the parameters of the ice storage air-conditioning system.

2. The method for controlling the ice storage air-conditioning system according to claim 1, wherein, the current cooling mode of the ice storage air-conditioning system is a dual-condition chiller cooling mode; and the step of adjusting the parameters of the ice storage air-conditioning system in the current cooling mode based on the outlet temperature of the plate heat exchanger of the ice storage air-conditioning system comprises:

   determining a number of operating water chilling units of the ice storage air-conditioning system based on an outlet water temperature and a current load rate of the ice storage air-conditioning system;
   determining a number of operating chilled water pumps in the ice storage air-conditioning system to be the same as the number of operating water chilling units; and
   adjusting an operation frequency of the chilled water pump based on the outlet temperature of the plate heat exchanger of the ice storage air-conditioning system.

3. The method for controlling the ice storage air-conditioning system according to claim 2, wherein, the step of adjusting the parameters of the ice storage air-conditioning system in the current cooling mode based on the outlet temperature of the plate heat exchanger of the ice storage air-conditioning system comprises:

   obtaining a target temperature of the ice storage air-conditioning system;
   increasing the operation frequency of the chilled water pump in response to a determination that the outlet temperature of the plate heat exchanger is greater than a sum of the target temperature and a preset first deviation value; and
   reducing the operation frequency of the chilled water pump in response to a determination that the outlet temperature of the plate heat exchanger is smaller than a difference value between the target temperature and the first deviation value.

4. The method for controlling the ice storage air-conditioning system according to claim 1, wherein, the current cooling mode of the ice storage air-conditioning system is an ice-storage tank cooling mode; and the step of adjusting the parameters of the ice storage air-conditioning system in the current cooling mode based on the outlet temperature of the plate heat exchanger of the ice storage air-conditioning system comprises at least one of the following:

   adjusting an opening degree of a valve of an ice storage tank in the ice storage air-conditioning system based on the outlet temperature of the plate heat exchanger of the ice storage air-conditioning system;
   adjusting an operation frequency of a chilled water pump based on the outlet temperature of the plate heat exchanger of the ice storage air-conditioning system; and
   adjusting a number of operating chilled water pumps based on the outlet temperature of the plate heat exchanger of the ice storage air-conditioning system.

5. The method for controlling the ice storage air-conditioning system according to claim 4, wherein, the step of adjusting the opening degree of the valve of the ice storage tank in the ice storage air-conditioning system based on the outlet temperature of the plate heat exchanger of the ice storage air-conditioning system comprises:

increasing the opening degree of the valve of the ice storage tank in response to a determination that the outlet temperature of the plate heat exchanger is greater than a sum of a target temperature and a preset second deviation value; and reducing the opening degree of the valve of the ice storage tank in response to a determination that the outlet temperature of the plate heat exchanger is smaller than a difference value between the target temperature and the second deviation value; and

the step of adjusting the number of operating chilled water pumps based on the outlet temperature of the plate heat exchanger of the ice storage air-conditioning system comprises:

increasing the number of operating chilled water pumps in response to a determination that the outlet temperature of the plate heat exchanger is greater than a sum of the target temperature and a preset third deviation value; and reducing the number of operating chilled water pumps in response to a determination that the outlet temperature of the plate heat exchanger is smaller than a difference value between the target temperature and the third deviation value.

6. The method for controlling the ice storage air-conditioning system according to claim 1, wherein, the current cooling mode of the ice storage air-conditioning system is a combined cooling mode of a dual duty chiller and an ice storage tank; and the step of adjusting the parameters of the ice storage air-conditioning system in the current cooling mode based on the outlet temperature of the plate heat exchanger of the ice storage air-conditioning system comprises:

determining a number of operating water chilling units of the ice storage air-conditioning system based on an outlet water temperature and a current load rate of the ice storage air-conditioning system;

determining a number of operating chilled water pumps of the ice storage air-conditioning system to be the same as the number of operating water chilling units;

adjusting an opening degree of a valve of an ice storage tank in the ice storage air-conditioning system based on the outlet temperature of the plate heat exchanger of the ice storage air-conditioning system; and

adjusting, in response to a determination that the opening degree of the valve is adjusted to a preset limit of the opening degree, an operation frequency of the chilled water pump based on the outlet temperature of the plate heat exchanger of the ice storage air-conditioning system.

7. The method for controlling the ice storage air-conditioning system according to claim 6, wherein, the step of adjusting, in response to a determination that the opening degree of the valve is adjusted to the preset limit of the opening degree, the operation frequency of the chilled water pump based on the outlet temperature of the plate heat exchanger of the ice storage air-conditioning system comprises:

increasing, in response to a determination that the opening degree of the valve is increased to a preset upper limit of the opening degree, the operation frequency of the chilled water pump based on the outlet temperature of the plate heat exchanger of the ice storage air-conditioning system; and

reducing, in response to a determination that the opening degree of the valve is reduced to a preset lower limit of the opening degree, the operation frequency of the chilled water pump based on the outlet temperature of the plate heat exchanger of the ice storage air-conditioning system.

8. The method for controlling the ice storage air-conditioning system according to claim 1, wherein, the method further comprises:
determining the current cooling mode of the ice storage air-conditioning system based on a current power time period and/or an ice amount in an ice storage tank of the ice storage air-conditioning system.

9. The method for controlling the ice storage air-conditioning system according to claim 8, wherein, the step of determining the current cooling mode of the ice storage air-conditioning system based on the current power time period and/or the ice amount in the ice storage tank of the ice storage air-conditioning system comprises:

determining that the current cooling mode of the ice storage air-conditioning system is a dual-condition chiller cooling mode in response to a determination that the current power time period is in a power wave flat period or the ice amount in the ice storage tank of the ice storage air-conditioning system is smaller than a preset first threshold;

determining that the current cooling mode of the ice storage air-conditioning system is an ice-storage tank cooling mode in response to a determination that the current power time period is in a power wave peak period, and the ice amount in the ice storage tank of the ice storage air-conditioning system is greater than a preset second threshold; and

determining that the current cooling mode of the ice storage air-conditioning system is a combined cooling mode of a dual duty chiller and an ice storage tank in response to a determination that the current power time period is in the power wave peak period and the ice amount in the ice storage tank of the ice storage air-conditioning system is smaller than a preset third threshold, or the current power time period is in the power wave flat period and the ice amount in the ice storage tank of the ice storage air-conditioning system is greater than a preset fourth threshold.

10. A device for controlling an ice storage air-conditioning system, applied to the controller of an ice storage air-conditioning system, the device comprising:

a cooling parameter determination module configured to adjust parameters of the ice storage air-conditioning system in a current cooling mode based on an outlet temperature of a plate heat exchanger of the ice storage air-conditioning system; and

a cooling operation execution module configured to control the ice storage air-conditioning system to perform a cooling operation based on the parameters of the ice storage air-conditioning system.

11. A method for controlling an ice storage air-conditioning system, applied to a controller of the ice storage air-conditioning system, the method comprising:

adjusting parameters of the ice storage air-conditioning system when switching a cooling mode based on an outlet temperature of a plate heat exchanger of the ice storage air-conditioning system; and

controlling the ice storage air-conditioning system to perform a cooling operation based on the parameters of the ice storage air-conditioning system.

12. The method for controlling the ice storage air-conditioning system according to claim 11, wherein, when the cooling mode of the ice storage air-conditioning system is switched from a dual-condition chiller cooling mode to an ice-storage tank cooling mode, the step of adjusting the parameters of the ice storage air-conditioning system when switching the cooling mode based on the outlet temperature of the plate heat exchanger of the ice storage air-conditioning system comprises:

maintaining a working status of a chilled water pump of the ice storage air-conditioning system, and adjusting a valve of an ice storage tank in the ice storage air-conditioning system and a regulating valve of the plate heat exchanger; wherein an opening degree of the valve of the ice storage tank and an opening degree of the regulating valve of the plate heat exchanger are determined both based on the outlet temperature of the plate heat exchanger; and

switching off a water chilling unit, a cooling water pump and a cooling water tower of the ice storage air-conditioning system.

13. The method for controlling the ice storage air-conditioning system according to claim 11, wherein, when the cooling mode of the ice storage air-conditioning system is switched from the ice-storage tank cooling mode to the dual-condition chiller cooling mode, the step of adjusting the parameters of the ice storage air-conditioning system when switching the cooling mode based on the outlet temperature of the plate heat exchanger of the ice storage air-conditioning system comprises:

determining a number of operating water chilling units of the ice storage air-conditioning system after a mode switching;

switching on the number of operating water chilling units, cooling water pumps and cooling water towers; and

adjusting an opening degree of a valve of an ice storage tank in the ice storage air-conditioning system based on an outlet water temperature of the water chilling unit and the outlet temperature of the plate heat exchanger.

14. The method for controlling the ice storage air-conditioning system according to claim 13, wherein, the step of determining the number of operating water chilling units of the ice storage air-conditioning system after the mode switching comprises:

obtaining a load of the ice storage air-conditioning system before the mode switching;

determining a predicted load of the ice storage air-conditioning system after the mode switching based on the load before switching and a pre-established load prediction model; and

determining the number of operating water chilling units of the ice storage air-conditioning system after the mode switching based on the predicted load after the mode switching.

15. The method for controlling the ice storage air-conditioning system according to claim 14, wherein, the step of adjusting the opening degree of the valve of the ice storage tank in the ice storage air-conditioning system based on the outlet water temperature of the water chilling unit and the outlet temperature of the plate heat exchanger comprises:

obtaining an actual load of the ice storage air-conditioning system after the mode switching;

increasing the opening degree of the valve of the ice storage tank in the ice storage air-conditioning system in response to a determination that a value obtained by subtracting the outlet water temperature of the water chilling unit with the outlet temperature of the plate heat exchanger is greater than a preset first threshold, or a ratio of the predicted load to the actual load after the mode switching is smaller than a preset ratio threshold;

reducing the opening degree of the valve of the ice storage tank in the ice storage air-conditioning system in response to a determination that the ratio of the predicted load to the actual load after mode switching is greater than the preset ratio threshold; and

closing the valve of the ice storage tank in the ice storage air-conditioning system in response to a determination that an absolute value of a difference value between the outlet water temperature of the water chilling unit and the outlet temperature of the plate heat exchanger is smaller than a preset second threshold.

16. The method for controlling the ice storage air-conditioning system according to claim 15, wherein, the step of reducing the opening degree of the valve of the ice storage tank in the ice storage air-conditioning system comprises: determining the opening degree of the valve of the ice storage tank in the ice storage air-conditioning system through a following formula:

$$V1, ub = (Tch,out - Tice,out) / (Tch,out - T3 + Tcomp);$$

wherein, $V1, ub$ is an upper limit of the opening degree of the valve of the ice storage tank in the ice storage air-conditioning system, $Tch, out$ is the outlet water temperature of the water chilling unit, and $Tice, out$ is an outlet water temperature of the ice storage tank, $T3$ is the outlet temperature of the plate heat exchanger, and $Tcomp$ is a preset compensation temperature.

17. The method for controlling the ice storage air-conditioning system according to claim 11, wherein, the method further comprises:

switching a cooling mode of the ice storage air-conditioning system based on a current power time period and/or an ice amount in an ice storage tank of the ice storage air-conditioning system.

18. The method for controlling the ice storage air-conditioning system according to claim 17, wherein the step of switching the cooling mode of the ice storage air-conditioning system comprises:

switching the cooling mode of the ice storage air-conditioning system from a dual-condition chiller cooling mode to an ice-storage tank cooling mode; or

alternatively, switching the cooling mode of the ice storage air-conditioning system from the ice-storage tank cooling mode to the dual-condition chiller cooling mode.

19. A device for controlling an ice storage air-conditioning system, applied to a controller of an ice storage air-conditioning system, the device comprising:

a cooling parameter determination module, configured to adjust parameters of the ice storage air-conditioning system when switching a cooling mode based on an outlet temperature of a plate heat exchanger of the ice storage air-conditioning system; and

a cooling operation execution module, configured to control the ice storage air-conditioning system to perform a cooling operation based on the parameters of the ice storage air-conditioning system.

20. An electronic device, comprising a processor and a memory, wherein the memory stores computer-executable instructions that are executable by the processor, and the processor, when executing the computer-executable instructions, is configured to implement the method for controlling the ice storage air-conditioning system according to any one of claims 1 to 9 and/or the method for controlling the ice storage air-conditioning system according to any one of claims 11 to 18.

21. A computer-readable storage medium, wherein, the computer-readable storage medium stores computer-executable instructions, and the computer-executable instructions, when invoked and executed by a processor, cause the processor to implement the method for controlling the ice storage air-conditioning system according to any one of claims 1 to 9 and/or the method for controlling the ice storage air-conditioning system according to any one of claims 11 to 18.

FIG. 1

| |
|---|
| Adjusting parameters of the ice storage air-conditioning system in a current cooling mode based on an outlet temperature of a plate heat exchanger of the ice storage air-conditioning system |

**S202**

| |
|---|
| Controlling the ice storage air-conditioning system to perform a cooling operation based on the parameters of the ice storage air-conditioning system |

**S204**

FIG. 2

| |
|---|
| Determining a cooling mode of the ice storage air-conditioning system based on a current power time period and/or an ice amount in an ice storage tank of the ice storage air-conditioning system |

**S302**

| |
|---|
| Adjusting parameters of the ice storage air-conditioning system in a current cooling mode based on an outlet temperature of a plate heat exchanger of the ice storage air-conditioning system |

**S304**

| |
|---|
| Controlling the ice storage air-conditioning system to perform a cooling operation based on the parameters of the ice storage air-conditioning system |

**S306**

FIG. 3

Determining an operation mode according to a time period and an ice amount in an ice tank

Ice-storage tank cooling mode

Dual-duty chiller cooling mode

Combined cooling mode

V4 valve IS opened, V3 and V5 valves are closed, V1 valve is fully closed, and V2 valve is fully opened

V4 and V5 valves are closed, V3 valve is closed, and a PID adjustment is performed on V1 and V2 valves

V4 valve is opened, V3 and V5 valves are closed, and the PID adjustment is performed on V1 and V2 valves

FIG. 4

Dual-duty chiller cooling mode

The number of dual duty chillers is controlled according to an outlet water temperature and a current load rate

The number of chilled water pumps are respectively corresponded to the number of water chilling units

A frequency of the chilled water pump is controlled according to T3

The frequency of the water pump is output

FIG. 5

```
┌─────────────────────────────┐
│   Ice-storage tank cooling  │
│            mode             │
└─────────────────────────────┘
              │
              ▼
┌─────────────────────────────┐
│  Chilled water pump is      │
│  operated at a minimum      │
│  frequency                  │
└─────────────────────────────┘
              │
              ▼
┌─────────────────────────────┐
│  V1 valve is controlled     │
│  according to T3            │
└─────────────────────────────┘
              │
              ▼
       ◇ |T3 − a target value| > a threshold? ◇ ──── No
              │ Yes
              ▼
┌─────────────────────────────┐
│  A frequency of the chilled │
│  water pump is controlled   │
│  according to T3            │
└─────────────────────────────┘
              │
              ▼
       ◇ |T3 − a target value| > a threshold? ◇ ──── No
              │ Yes
              ▼
       ◇ Does the frequency of the water pump reach an upper limit ◇ ──── No
              │ Yes
              ▼
┌─────────────────────────────┐
│  the number of the chilled  │
│  water pump + 1             │
└─────────────────────────────┘
              │
              ▼
┌─────────────────────────────┐
│  The valve opening, the     │
│  number of operating water  │
│  pumps and the frequency of │
│  water pump are output      │
└─────────────────────────────┘
```

FIG. 6

Combined cooling mode

↓

The number of dual duty
chillers is controlled according
to an outlet water
temperature and a current

↓

The number of chilled water
pumps are respectively
corresponded to the number
of water chilling units

↓

Chilled water pump is operated
at a minimum frequency

↓

V1 valve is controlled according
to T3

↓

|T3 − a target value| > a threshold?  ——No——┐

Yes ↓

A frequency of the chilled water
pump is controlled according to T3

↓

The valve opening, the number of
operating water pumps and the
frequency of water pump are output

FIG. 7

```
┌─────────────────────────────┐
│   Cooling  Parameter        │
│   Determination  Module     │
│            81               │
└─────────────────────────────┘
              │
┌─────────────────────────────┐
│   Cooling  Operation        │
│   Execution  Module         │
│            82               │
└─────────────────────────────┘
```

FIG. 8

```
┌───────────────────────────────────────────────────────────────┐   S902
│  Adjusting parameters of the ice storage air-conditioning      │
│  system when switching a cooling mode based on an outlet        │
│  temperature of a plate heat exchanger of the ice storage       │
│  air-conditioning system                                        │
└───────────────────────────────────────────────────────────────┘
                              │
                              ▼
┌───────────────────────────────────────────────────────────────┐   S904
│  Controlling the ice storage air-conditioning system to         │
│  perform a cooling operation based on the parameters of the     │
│  ice storage air-conditioning system                            │
└───────────────────────────────────────────────────────────────┘
```

FIG. 9

```
┌───────────────────────────────────────────────────────────────┐   S1002
│  Switching a cooling mode of the ice storage air-conditioning   │
│  system based on a current power time period and/or an ice      │
│  amount in an ice storage tank of the ice storage air-          │
│  conditioning system                                            │
└───────────────────────────────────────────────────────────────┘
                              │
                              ▼
┌───────────────────────────────────────────────────────────────┐   S1004
│  Adjusting parameters of the ice storage air-conditioning      │
│  system when switching the cooling mode based on an outlet      │
│  temperature of a plate heat exchanger of the ice storage       │
│  air-conditioning system                                        │
└───────────────────────────────────────────────────────────────┘
                              │
                              ▼
┌───────────────────────────────────────────────────────────────┐   S1006
│  Controlling the ice storage air-conditioning system to         │
│  perform a cooling operation based on the parameters of the     │
│  ice storage air-conditioning system                            │
└───────────────────────────────────────────────────────────────┘
```

FIG. 10

Time period goes from a wave peak to a wave flat

↓

V1 valve is opened, an opening of the V1 valve is adjusted according to an outlet temperature at a secondary side of the plate exchanger

Delay ↓

a chiller shutdown signal is sent

↓

A regulating valve of the plate exchanger is adjusted according to T1

↓

V5 valve is opened

Delay ↓

Chilled valve and cooling valve of the chiller are switched off

↓

Cooling pump and cooling tower are switched on

FIG. 11

```
┌─────────────────────────────┐
│ Time period goes from a wave peak to │
│        a wave flat          │
└─────────────────────────────┘
              │
              ▼                    Delay      ┌─────────────────────────────┐
┌─────────────────────────────┐   ──────────►│ The dual duty chiller is started │
│ Air-conditioning load is predicted │         └─────────────────────────────┘
│        based on big data    │                           │
└─────────────────────────────┘                           ▼
              │                         ╱╲
              ▼                        ╱  ╲
┌─────────────────────────────┐      ╱ Outlet water temperature of the ╲   No   ┌─────────────────────────────┐
│ The number of water chilling units to │◄   chiller – a target value of T3 < threshold 1,  ──────►│ An opening of V1 valve is adjusted │
│      be started is calculated │      ╲  or Qreal/Qpre < 50%          ╱        └─────────────────────────────┘
└─────────────────────────────┘        ╲                    ╱
              │                          ╲╱
              ▼                           │ Yes
┌─────────────────────────────┐          ▼
│ The chilled valve corresponding to the │        ╱╲
│ chiller is waiting to be opened, and a │       ╱  ╲
│     cooling valve is opened  │       ╱ Outlet water temperature of the chiller ╲   No   ┌─────────────────────────────┐
└─────────────────────────────┘      │ - the target value of T3| > threshold 2  ──────►│ An opening of V1 valve is adjusted │
              │                        ╲                    ╱        └─────────────────────────────┘
              ▼                          ╲╱
┌─────────────────────────────┐          │ Yes
│      V5 valve is closed     │          ▼
│                             │       ┌─────────────────────────────┐
└─────────────────────────────┘       │      V1 valve is closed      │
              │                        └─────────────────────────────┘
              ▼
┌─────────────────────────────┐
│ The cooling tower and cooling pump │
│ corresponding to the chiller are │
│        switched on          │
└─────────────────────────────┘
```

FIG. 12

Cooling Parameter
Determination Module
131

Cooling Operation
Execution Module
132

FIG. 13

Communication
Interface
103

Processor
101

Bus
102

Memory
100

FIG. 14

## INTERNATIONAL SEARCH REPORT

| International application No. |
|---|
| **PCT/CN2022/136337** |

**A. CLASSIFICATION OF SUBJECT MATTER**

F24F11/64(2018.01)i;F24F11/85(2018.01)i;F24F11/84(2018.01)i;F24F5/00(2006.01)i

According to International Patent Classification (IPC) or to both national classification and IPC

**B. FIELDS SEARCHED**

Minimum documentation searched (classification system followed by classification symbols)

IPC:F24F

Documentation searched other than minimum documentation to the extent that such documents are included in the fields searched

Electronic data base consulted during the international search (name of data base and, where practicable, search terms used)

CNABS, CNTXT, VEN, WPABS, ENTXT, OETXT, CNKI, 万方, WANFANG, 超星, CHAOXING, 读秀, DUXIU: 美控, 美智, 美的, 格力, 方兴, 李元阳, 邱艺德, 费杰, 王聪, 冰蓄冷, 板换, 板式换热器, 出口温度, 出水温度, 电流负荷, 双工况, 水泵, 台数, 温度, 蓄冰, 制冷模式, cool+, ice storage, air condition+, heat exchanger, temperature, outlet, current, load, mode

**C. DOCUMENTS CONSIDERED TO BE RELEVANT**

| Category* | Citation of document, with indication, where appropriate, of the relevant passages | Relevant to claim No. |
|---|---|---|
| PX | CN 114234401 A (SHANGHAI AMERICAN CONTROL SMART BUILDING LTD., CO.) 25 March 2022 (2022-03-25) claims 1-12, and description, paragraphs 0036-0084, and figures 1-9 | 1-21 |
| A | CN 112460704 A (GREE ELECTRIC APPLIANCES INC. ZHUHAI) 09 March 2021 (2021-03-09) entire document | 1-21 |
| A | CN 110290683 A (CHANGJIANG INSTITUTE OF SURVEY, PLANNING, DESIGN AND RESEARCH CO., LTD.) 27 September 2019 (2019-09-27) entire document | 1-21 |
| A | CN 106594929 A (SHENZHEN AUTO-UNION ENERGY-SAVING TECHNOLOGY CO., LTD.) 26 April 2017 (2017-04-26) entire document | 1-21 |
| A | CN 1916519 A (SOUTH CHINA UNIVERSITY OF TECHNOLOGY et al.) 21 February 2007 (2007-02-21) entire document | 1-21 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **29 January 2023** | **13 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/136337**

C. DOCUMENTS CONSIDERED TO BE RELEVANT

| Category* | Citation of document, with indication, where appropriate, of the relevant passages | Relevant to claim No. |
|---|---|---|
| A | JP 2004233009 A (MIURA KOGYO K. K.) 19 August 2004 (2004-08-19)<br>entire document | 1-21 |
| X | 谭立民 等 (TAN, Limin et al.). "杭州市民中心冰蓄冷系统及其控制 (Ice-storage System and its Control in Hangzhou Civic Center)"<br>制冷技术 (Refrigeration Technology), No. 03, 30 September 2010 (2010-09-30),<br>ISSN: 2095-4468,<br>pages 51-54, sections 1-3 | 1-21 |
| X | 马健 (MA, Jian). "冰蓄冷空调自动控制系统设计 (Non-official translation: Design of Automatic Control System for Ice Storage Air Conditioning)"<br>中国优秀硕士论文全文数据库 工程科技II辑 (Engineering Science and Technology II, China Master's Theses Full-Text Database), 15 April 2015 (2015-04-15),<br>pages 3-24 | 1, 4-5, 8, 10-12, 17-21 |
| Y | 马健(MA, Jian). "冰蓄冷空调自动控制系统设计 (Non-official translation: Design of Automatic Control System for Ice Storage Air Conditioning)"<br>中国优秀硕士论文全文数据库 工程科技II辑 (Engineering Science and Technology II, China Master's Theses Full-Text Database), 15 April 2015 (2015-04-15),<br>pages 3-24 | 2-3, 6-7, 9, 13-16 |
| Y | 杨晓军 (YANG, Xiaojun). "冰蓄冷空调控制系统的设计与应用 (Non-official translation: Design and Application of Ice Storage Air Conditioning Control System)"<br>中国优秀硕士论文全文数据库 工程科技II辑 (Engineering Science and Technology II, China Master's Theses Full-Text Database), 15 December 2008 (2008-12-15),<br>pages 4-47 | 2-3, 6-7, 9, 13-16 |

Form PCT/ISA/210 (second sheet) (July 2022)

**INTERNATIONAL SEARCH REPORT**
Information on patent family members

International application No.

**PCT/CN2022/136337**

| Patent document cited in search report | | | Publication date (day/month/year) | Patent family member(s) | | | Publication date (day/month/year) |
|---|---|---|---|---|---|---|---|
| CN | 114234401 | A | 25 March 2022 | None | | | |
| CN | 112460704 | A | 09 March 2021 | CN | 112460704 | B | 14 December 2021 |
| CN | 110290683 | A | 27 September 2019 | CN | 210579817 | U | 19 May 2020 |
| CN | 106594929 | A | 26 April 2017 | None | | | |
| CN | 1916519 | A | 21 February 2007 | CN | 100443814 | C | 17 December 2008 |
| JP | 2004233009 | A | 19 August 2004 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111619177

- CN 202111616407